# EUROPEAN PATENT APPLICATION

(11) **EP 4 394 447 A1**
(43) Date of publication of application: **03.07.2024**
(21) Application number: 21957824.2
(22) Date of filing: 23.09.2021
(51) Int. Cl.: G01S 17/894

(54) **SIGNAL PROCESSING METHOD AND APPARATUS, AND SIGNAL TRANSMISSION METHOD AND APPARATUS**

(71) Applicant: Huawei Technologies Co., Ltd., Shenzhen, Guangdong 518129 (CN)
(72) Inventor: DAI, Zhiwei, Shenzhen, Guangdong 518129 (CN); WANG, Shuai, Shenzhen, Guangdong 518129 (CN); YU, Anliang, Shenzhen, Guangdong 518129 (CN); CAO, Guoliang, Shenzhen, Guangdong 518129 (CN); WANG, Wei, Shenzhen, Guangdong 518129 (CN)
(74) Representative: Gill Jennings & Every LLP
(86) International application number: PCT/CN2021/120019
(87) International publication number: WO 2023/044688

(57) **Abstract**

Embodiments of this application provide a signal processing method, a signal transmission method, and an apparatus, which relate to detection technologies, are applied to the field of sensor technologies, and may be applied to intelligent driving, intelligent transportation, surveying and mapping, and intelligent manufacturing. In embodiments of this application, a processing apparatus obtains an echo signal of a detector to obtain a detection result. The detection result may include an image of a detection region and point cloud data of the detection region, or the detection result may be obtained with reference to an image of a detection region and point cloud data of the detection region. In embodiments of this application, a point cloud and an image are obtained based on signals of different modules in a detector, and the image may be obtained without a visual sensor like a camera being added, so that costs of a detection apparatus do not significantly increase. Resolution and accuracy of a detection result are improved, and detection performance is improved. Embodiments of this application may be further applied to the internet of vehicles, for example, vehicle to everything V2X and vehicle-to-vehicle V2V.

## Description

### TECHNICAL FIELD

This application relates to detection technologies, and is applied to the field of sensor technologies, and in particular, to a signal processing method, a signal transmission method, and an apparatus.

### BACKGROUND

A lidar is a ranging apparatus that combines a laser technology and an optical-electrical conversion technology. A basic working principle of the lidar is as follows: A transmit end of the lidar transmits laser light to a detection region, a receive end of the lidar receives an optical signal returned by the detection region, and information about the detection region is determined by measuring round-trip time of the optical signal. The lidar can measure a distance to an object accurately, but resolution of the lidar is limited due to limitations of a divergence angle of the laser light, subsequent data processing, and the like.

Therefore, how to improve the detection resolution of the lidar is a research focus of a person skilled in the art.

### SUMMARY

Embodiments of this application provide a signal processing method, a signal transmission method, and an apparatus, to improve detection resolution.

According to a first aspect, an embodiment of this application provides a signal processing method. The method includes:
obtaining at least one first echo signal from a first detection module, where the first echo signal is obtained by using a first optical signal detected by the first detection module, and the first optical signal includes a return signal obtained by detecting a detection region by using a transmit signal;
obtaining at least one second echo signal from a second detection module, where the second echo signal is obtained by using a second optical signal detected by the second detection module, and the second optical signal includes a background optical signal from the detection region; and
the first detection module and the second detection module are included in a same detector; and
obtaining a detection result of the detection region based on the at least one first echo signal and the at least one second echo signal.

In this embodiment of this application, the echo signal provided by the first detection module of the detector may be used to obtain point cloud data corresponding to the detection region, and the echo signal provided by the second detection module of the detector may be used to obtain an image corresponding to the detection region. The point cloud data is obtained through active detection (or referred to as depth detection or active detection), and the image is obtained through passive detection (or referred to as passive detection). In an active detection process, a detection apparatus actively transmits a laser signal and receives a return signal of an echo signal. An image is a result of passive imaging, and the detection apparatus may not be required to actively transmit a signal.

The detection result of the detection region may include the image of the detection region and the point cloud data of the detection region. Alternatively, the detection result may be obtained with reference to the point cloud data and the image of the detection region. For example, the point cloud data is enhanced based on the image of the detection region to obtain enhanced point cloud data. For another example, the image is enhanced based on the point cloud data, to obtain enhanced image data. For another example, a fusion detection result of the detection region is obtained by fusion of the image and a point cloud.

In this embodiment of this application, a detection result is obtained by using signals of different modules in a detector, and an image may be obtained without a visual sensor like a camera being added, so that costs of the detection apparatus do not significantly increase. The point cloud data has high ranging precision, and the image has high resolution. In this way, resolution and accuracy of the detection result are improved, and detection performance is improved.

Because the first detection module and the second detection module belong to a same detector, location deviations of the first detection module and the second detection module on a detector plane may be determined to a micrometer level, to avoid complex computing in a registration process of different sensors in a field of view region, and reduce computing resources. Further, the two detection modules may further share a same optical system, so as to reduce costs of optical elements, avoid a problem of a field of view region mismatch caused by an installation tolerance, vibration, or the like, reduce computing resources, and improve detection performance of the detection apparatus.

In addition, when the detection result is obtained with reference to the point cloud data and the image, the detection result obtained with reference to the point cloud data and the image has both high ranging precision and high resolution. In this way, the resolution and the accuracy of the detection result are improved. Because the resolution of the detection result is high, a capability of distinguishing an object is enhanced. In this way, angular resolution of the detection apparatus is effectively improved, and detection performance is improved.

The foregoing method may be applied to a processing apparatus. In a design, the processing apparatus may be located inside the detection apparatus. For example, the detection apparatus includes the processing apparatus and the detector, and optionally further includes a signal transmitter (configured to generate a transmit signal). Further, optionally, the processing apparatus in the detection apparatus may communicate with the detector through a connection path. Therefore, the detection apparatus may obtain echo signals from the first detection module and the second detection module of the detector. Alternatively, optionally, the detection apparatus may include a communication interface, and the detection apparatus receives echo signals from the first detection module and the second detection module of the detector through the communication interface.

Alternatively, optionally, the processing apparatus is located outside the detection apparatus. Further, the processing apparatus may communicate with the detection apparatus, and a communication link may be a wired link, a wireless link, or a combination of a wired link and a wireless link. For example, the detection apparatus is a vehicle-mounted radar. The detection apparatus may be connected to a vehicle-mounted processing apparatus (for example, an in-vehicle media data center (Media Data Center, MDC) or another possible in-vehicle processor), and the in-vehicle processor may obtain an echo signal from the detection apparatus (or specifically from the detector of the detection apparatus).

Alternatively, the processing apparatus may be partially located inside the detection apparatus, and partially located outside the detection apparatus.

The foregoing detection apparatus may include a lidar, a fusion detection radar, or another ranging apparatus.

In a possible implementation of the first aspect, the method further includes:
processing the at least one first echo signal to obtain the point cloud data corresponding to the detection region; and
processing the at least one second echo signal, and imaging the detection region, to obtain the image corresponding to the detection region.

In this embodiment of this application, the processing apparatus may obtain the detection result based on the at least one first echo signal and the at least one second echo signal.

Alternatively, the processing apparatus may obtain the detection result of the detection region based on the point cloud data and the image after separately obtaining the point cloud data and the image.

In another possible implementation of the first aspect, the obtaining a detection result of the detection region based on the first echo signal and the second echo signal includes:
obtaining enhanced point cloud data of the detection region based on the point cloud data corresponding to the detection region and the image corresponding to the detection region.

In this embodiment of this application, the enhanced point cloud data has more image features or has higher accuracy than the point cloud data obtained based on the first echo signal (referred to as point cloud data below for ease of description).

For example, the point cloud data is supplemented to the original point cloud data based on the image of the detection region, to obtain the enhanced point cloud data. Because there are more points in the enhanced point cloud data, density of the points is higher, so that a contour, a texture, and the like of an object in the enhanced point cloud data are clearer, and the resolution of the detection apparatus is improved.

For another example, the enhanced point cloud data is point cloud data on which noise filtering is performed, or the enhanced point cloud data may include the point cloud data and information indicating noise in the point cloud data.

For another example, based on the image of the detection region, the contour of the object and/or the texture of the object in the detection region are supplemented to the point cloud data, so that the object represented by the enhanced point cloud data is clearer, and a difference and a gap between objects are more obvious, so as to improve the accuracy of the detection result.

In another possible implementation of the first aspect, a quantity of points in the enhanced point cloud data is greater than a quantity of points in the point cloud data that corresponds to the detection region and that is obtained by processing the at least one first echo signal.

The foregoing describes a possible feature of the enhanced point cloud data. The enhanced point cloud data has more points, so that a detection result with a more obvious and clearer shape, a more obvious and clearer contour, or the like can be obtained. In this way, the resolution of the detection result is improved, and the angular resolution of the detection apparatus is improved.

In another possible implementation of the first aspect, the obtaining enhanced point cloud data of the detection region based on the point cloud data corresponding to the detection region and the image corresponding to the detection region includes:
filtering out, based on the contour that is of the target object in the detection region and that is indicated by the image of the detection region, noise in the point cloud data corresponding to the detection region, to obtain the enhanced point cloud data.

Optionally, the noise may be a point caused by excessively strong background light (or an excessively strong interference signal, or excessively strong current noise), or the like. In a real environment, there is usually no object corresponding to a region in which the noise occurs, and the region may further affect a real point. Optionally, the noise may be a point that is in a plurality of points in the point cloud data and that does not belong to the contour of the target object.

In this embodiment of this application, the noise in the point cloud data may be determined based on image information. Further, the processing apparatus may filter out the noise in the point cloud data, to improve accuracy and effectiveness of the point cloud data, and improve detection performance.

In another possible implementation of the first aspect, the method further includes:
obtaining a size of the target object in the detection region based on the enhanced point cloud data.

In this embodiment of this application, the enhanced point cloud data enables the processing apparatus to accurately measure a size of an object. The size of the target object may include one or more of a length, a width, a height, and the like of the target object.

In a design, the detection apparatus may clearly determine an edge of an object based on the enhanced point cloud data, and then may accurately obtain a size of the object based on distance information of a point cloud at the corresponding edge.

The size of the object is recognized, so that a capability of recognizing the object by the apparatus can be improved, and an intelligence degree of the apparatus can be improved, so as to improve user experience. For example, in the field of autonomous driving (or assisted driving), a vehicle-mounted apparatus recognizes a size of an object, so that decisions such as route planning, obstacle avoidance, and braking can be more accurate, so as to improve driving safety.

In another possible implementation of the first aspect, the enhanced point cloud data is specifically enhanced point cloud data in an overlapping region, and the overlapping region is an overlapping region between the point cloud data of the detection region and the image of the detection region.

Because the overlapping region is a region in which the point cloud data matches the image, accuracy of the enhanced point cloud data in the overlapping region is high, so as to improve reliability of the detection result.

In another possible implementation of the first aspect, the obtaining a detection result of the detection region based on the first echo signal and the second echo signal includes:
performing enhancement on the image of the detection region based on the point cloud data of the detection region, to obtain an enhanced image of the detection region.

Because the point cloud data is three-dimensional data including distance information, and is slightly affected by an angle of ambient light, an exposure length, or the like, enhancement is performed on the image based on the point cloud data, to improve accuracy of the image and improve the detection performance of the detection apparatus.

Optionally, enhancement includes one or more of the following operations:
shadow removal, noise reduction, contrast enhancement, overexposure removal, underexposure compensation, or the like. The shadow removal is used as an example. The point cloud data is data in a 3-dimensional form, and processing may be performed on a shadow region like a recess or a region without background light, for example, a shadow removal operation like increasing luminance of the shadow region or setting the shadow region to preset luminance (or a preset color), to improve an image effect.

In another possible design of the first aspect, the method further includes:
obtaining a fusion detection result of the detection region based on the point cloud data of the detection region and the image of the detection region.

For another example, when a pixel granularity of the image is smaller, the image has better resolution than the point cloud data. The enhanced point cloud data obtained by fusing the image and the point cloud data has higher resolution than the point cloud data. Therefore, the resolution of the detection result is improved.

In another possible implementation of the first aspect, the detector includes P×Q detection elements, P is a quantity of rows of detection elements included in the detector, and Q is a quantity of columns of detection elements included in the detector.

In this embodiment of this application, on the one hand, the detector in an array form can obtain a larger field of view in one detection process, to improve detection efficiency. On the other hand, the detector in the array form may form one or more pixels, to improve accuracy and resolution of a detection result and improve detection performance.

In another possible implementation of the first aspect, the first detection module and the second detection module each include a plurality of detection elements.

In another possible implementation of the first aspect, the at least one first echo signal obtained from the first detection module includes a plurality of first pixels, a quantity of detection elements corresponding to the first pixels is M, and M is a positive integer;
the at least one second echo signal obtained from the second detection module includes a plurality of second pixels, a quantity of detection elements corresponding to the first pixels is N, and N is a positive integer; and
M is greater than N.

The foregoing describes a possible pixel granularity design provided in this embodiment of this application. Because the second pixel includes fewer detection elements, pixel density of the second echo signal is higher than pixel density of the first echo signal, so that a clearer image can be obtained, the resolution of the detection result is improved, and the angular resolution of the detection apparatus is improved.

In another possible implementation of the first aspect, the at least one first echo signal is obtained by the first detection module through detection at at least one scanning angle; and
the at least one second echo signal is obtained by the second detection module through detection at at least one scanning angle.

The foregoing describes a detection form designed in this embodiment of this application. An echo signal may be obtained by the detection apparatus through detection in a scanning form.

In a design, the detection apparatus is a scanning detection apparatus. The scanning detection apparatus may perform scanning detection on the detection region at a plurality of angles.

In another design, the detection apparatus is a flash-type detection apparatus.

According to a second aspect, an embodiment of this application provides a signal processing method. The method includes:
obtaining at least one echo signal from a detector, where the at least one echo signal is obtained by using an optical signal detected by the detector, and the optical signal includes a return signal obtained by detecting a detection region by using a transmit signal;
obtaining, based on the at least one echo signal, point cloud data corresponding to the detection region and an image corresponding to the detection region; and
obtaining a detection result of the detection region based on the point cloud data corresponding to the detection region and the image corresponding to the detection region.

In this embodiment of this application, the point cloud data corresponding to the detection region and the image corresponding to the detection region are obtained based on the at least one echo signal, and the detection result of the detection region is obtained based on the point cloud data and the image. The detection result may include the image of the detection region and the point cloud data of the detection region. Alternatively, the detection result may be obtained with reference to the point cloud data and the image of the detection region. For example, the point cloud data is enhanced based on the image of the detection region to obtain enhanced point cloud data. For another example, the image is enhanced based on the point cloud data, to obtain enhanced image data. For another example, a fusion detection result of the detection region is obtained by fusion of the image and the point cloud data.

In this embodiment of this application, a detection result is obtained by using a detector, and an image is obtained without a visual sensor like a camera being added, so that costs of a detection apparatus do not significantly increase. A signal used to obtain point cloud data and a signal used to obtain an image are from a same detector. Therefore, the point cloud data and the image can be completely aligned, so that a detection result has high ranging precision and high resolution, and complex computing in a registration process of different sensors in a field of view region is avoided. In this way, computing resources are reduced.

In addition, when the detection result is obtained with reference to the point cloud data and the image, the detection result obtained with reference to the point cloud data and the image has both the high ranging precision and the high resolution. In this way, the resolution and accuracy of the detection result are improved. Because the resolution of the detection result is high, a capability of distinguishing an object is enhanced. In this way, angular resolution of the detection apparatus is effectively improved, and detection performance is improved.

In a possible implementation of the second aspect, the at least one echo signal includes a feature signal and a background signal.

A target in the detection region may reflect the transmit signal, to obtain the return signal corresponding to the transmit signal. A signal formed by the return signal usually has a feature in waveform. Therefore, a detection rule may be set based on the feature, and a signal corresponding to a possible return signal in the echo signal is filtered according to the detection rule. In this embodiment of this application, a signal that meets the detection rule may be referred to as a feature signal. In other words, the feature signal usually has a special waveform feature, and may be a signal corresponding to the return signal.

For example, the feature signal may include one or more of a pulse signal, a peak signal, a rising edge signal (or referred to as a front-porch signal), a waveform center-of-mass signal, or the like. The pulse signal is a signal that fluctuates for a short time like a sphygmus signal. The peak signal is a signal corresponding to a highest value of a signal value in a period of time. The rising edge signal is a segment of a signal whose signal value continuously increases in a period of time. The waveform center-of-mass signal is a signal corresponding to a center-of-mass location of waveform information.

For another example, a waveform feature of the signal formed by the return signal is obtained through presetting, pre-configuration, or computing, and a signal that meets the feature may be detected. Optionally, the feature signal may reflect information such as a distance to the target, or coordinates, a location, a color, a reflectivity, a reflection intensity, or a speed of the target. Alternatively, the feature signal may be processed to obtain information such as a distance to the target, or coordinates, a location, a color, a reflectivity, a reflection intensity, or a speed of the target.

The background signal may alternatively be referred to as a noise signal. The background signal may be a signal formed due to background light, an interference signal, current noise, or the like of the detection region.

In some scenarios, the background signal is understood as a signal other than the feature signal in the echo signal. For example, the background signal may be obtained by filtering out the feature signal in the echo signal.

In another possible implementation of the second aspect, the obtaining, based on the at least one echo signal, point cloud data of the detection region and an image corresponding to the detection region includes:
obtaining, based on the feature signal in the at least one echo signal, the point cloud data corresponding to the detection region; and
imaging the detection region based on the background signal in the at least one echo signal, to obtain the image corresponding to the detection region.

On the one hand, because a signal having a special waveform feature may be a signal reflected by a target object, distance information and the like may be obtained based on the feature signal. The distance information may be referred to as the point cloud data, or the point cloud data may be obtained by processing the distance information.

On the other hand, the background signal may be a signal formed due to background light, an interference signal, or the like of the detection region. Therefore, light intensity information may be obtained based on the background signal. A region with a strong light intensity is bright, and a region with a weak light intensity is dark, so that the detection region may be imaged, to obtain the image corresponding to the detection region.

In another possible implementation of the second aspect, the obtaining a detection result of the detection region based on the point cloud data corresponding to the detection region and the image corresponding to the detection region includes:
obtaining the enhanced point cloud data of the detection region based on the point cloud data corresponding to the detection region and the image corresponding to the detection region.

In this embodiment of this application, the enhanced point cloud data has more image features or has higher accuracy than the point cloud data obtained based on a first echo signal (referred to as point cloud data below for ease of description).

For example, a point cloud is supplemented to the original point cloud data based on the image of the detection region, to obtain the enhanced point cloud data. Because there are more points in the enhanced point cloud data, density of the points is higher, so that a contour, a texture, and the like of an object in the enhanced point cloud data are clearer, and the resolution of the detection apparatus is improved.

For another example, the enhanced point cloud data is point cloud data on which noise filtering is performed, or the enhanced point cloud data may include the point cloud data and information indicating noise in the point cloud data.

For another example, based on the image of the detection region, the contour of the object and/or the texture of the object in the detection region are supplemented to the point cloud data, so that the object represented by the enhanced point cloud data is clearer, and a difference and a gap between objects are more obvious, so as to improve the accuracy of the detection result.

In another possible implementation of the first aspect, a quantity of points in the enhanced point cloud data is greater than a quantity of points in the point cloud data that corresponds to the detection region and that is obtained by processing the at least one first echo signal.

The foregoing describes a possible feature of the enhanced point cloud data. The enhanced point cloud data has more points, so that a detection result with a more obvious and clearer shape, a more obvious and clearer contour, or the like can be obtained. In this way, the resolution of the detection result is improved, and the angular resolution of the detection apparatus is improved.

In another possible implementation of the second aspect, the obtaining enhanced point cloud data of the detection region based on the point cloud data corresponding to the detection region and the image corresponding to the detection region includes:
filtering out, based on the contour that is of the target object in the detection region and that is indicated by the image of the detection region, noise in the point cloud data corresponding to the detection region, to obtain the enhanced point cloud data.

Optionally, the noise may be a point caused by excessively strong background light (or an excessively strong interference signal, or excessively strong current noise), or the like. In a real environment, there is usually no object corresponding to a region in which the noise occurs, and the region may further affect a real point. Optionally, the noise may be a point that is in a plurality of points in the point cloud data and that does not belong to the contour of the target object.

In this embodiment of this application, the noise in the point cloud data may be determined based on image information. Further, a processing apparatus may filter out the noise in the point cloud data, to improve accuracy and effectiveness of the point cloud data, and improve detection performance.

In another possible implementation of the second aspect, the method further includes:
obtaining a size of the target object in the detection region based on the enhanced point cloud data.

In this embodiment of this application, the enhanced point cloud data enables the processing apparatus to accurately measure a size of an object. The size of the target object may include one or more of a length, a width, a height, and the like of the target object.

In a design, the detection apparatus may clearly determine an edge of an object based on the enhanced point cloud data, and then may accurately obtain a size of the object based on distance information of a point cloud at the corresponding edge.

The size of the object is recognized, so that a capability of recognizing the object by the apparatus can be improved, and an intelligence degree of the apparatus can be improved, so as to improve user experience. For example, in the field of autonomous driving (or assisted driving), a vehicle-mounted apparatus recognizes a size of an object, so that decisions such as route planning, obstacle avoidance, and braking can be more accurate, so as to improve driving safety.

In another possible implementation of the second aspect, the enhanced point cloud data is specifically enhanced point cloud data in an overlapping region, and the overlapping region is an overlapping region between the point cloud data of the detection region and the image of the detection region.

Because the overlapping region is a region in which the point cloud data matches the image, accuracy of the enhanced point cloud data in the overlapping region is high, so as to improve reliability of the detection result.

In another possible implementation of the second aspect, the obtaining enhanced point cloud data of the detection region based on the point cloud data corresponding to the detection region and the image corresponding to the detection region includes:
performing enhancement on the image of the detection region based on the point cloud data of the detection region, to obtain an enhanced image of the detection region.

Because the point cloud data is three-dimensional data including distance information, and is slightly affected by an angle of ambient light, an exposure length, or the like, enhancement is performed on the image based on the point cloud data, to improve accuracy of the image and improve the detection performance of the detection apparatus.

Optionally, enhancement includes one or more of the following operations:
shadow removal, noise reduction, contrast enhancement, overexposure removal, underexposure compensation, or the like. The shadow removal is used as an example. The point cloud data is data in a 3-dimensional form, and processing may be performed on a shadow region like a recess or a region without background light, for example, a shadow removal operation like increasing luminance of the shadow region or setting the shadow region to preset luminance (or a preset color), to improve an image effect.

In another possible design of the second aspect, the method further includes:
obtaining a fusion detection result of the detection region based on the point cloud data of the detection region and the image of the detection region.

For another example, when a pixel granularity of the image is smaller, the image has better resolution than the point cloud data. The enhanced point cloud data obtained by fusing the image and the point cloud data has higher resolution than the point cloud data. Therefore, the resolution of the detection result is improved.

In another possible implementation of the second aspect, the detector includes P×Q detection elements, P is a quantity of rows of detection elements included in the detector, and Q is a quantity of columns of detection elements included in the detector.

In this embodiment of this application, on the one hand, the detector in an array form can obtain a larger field of view in one detection process, to improve detection efficiency. On the other hand, the detector in the array form may form one or more pixels, to improve accuracy and resolution of a detection result and improve detection performance.

In another possible implementation of the second aspect, the at least one first echo signal is obtained by the detector through detection at at least one scanning angle.

The foregoing describes a detection form designed in this embodiment of this application. An echo signal may be obtained by the detection apparatus through detection in a scanning form. In a design, the detection apparatus is a scanning detection apparatus. The scanning detection apparatus may perform scanning detection on the detection region at a plurality of angles.

In another design, the detection apparatus is a flash-type detection apparatus.

According to a third aspect, an embodiment of this application provides a signal transmission method. The method includes the following steps.

A first detection module detects a first optical signal and obtains at least one first echo signal, where the first optical signal includes a return signal obtained by detecting a detection region by using a transmit signal.

The first detection module sends the at least one first echo signal to a signal processing apparatus.

A second detection module detects a second optical signal and obtains at least one second echo signal, where the second optical signal includes a background optical signal from the detection region.

The second detection module sends the at least one second echo signal to the signal processing apparatus.

The first detection module and the second detection module are included in a same detector, and the at least one first echo signal and the at least one second echo signal are used to obtain a detection result of the detection region.

In a possible implementation of the third aspect, the at least one first echo signal is used to obtain point cloud data corresponding to the detection region, and the at least one second echo signal is used to obtain an image corresponding to the detection region.

In another possible implementation of the third aspect, a quantity of points in enhanced point cloud data is greater than a quantity of points in the point cloud data that corresponds to the detection region and that is obtained by processing the at least one first echo signal.

In another possible implementation of the third aspect, the detector includes P×Q detection elements, P is a quantity of rows of detection elements included in the detector, and Q is a quantity of columns of detection elements included in the detector.

In another possible implementation of the third aspect, the first detection module and the second detection module each include a plurality of detection elements.

According to a fourth aspect, an embodiment of this application provides a signal transmission method. The method includes the following steps.

A detector detects an optical signal to obtain at least one echo signal, where the optical signal includes a return signal obtained by detecting a detection region by using a transmit signal.

The detector sends the at least one echo signal to a signal processing apparatus.

The at least one echo signal is used to obtain point cloud data corresponding to the detection region and an image corresponding to the detection region.

In a possible implementation of the fourth aspect, the at least one echo signal includes a feature signal and a background signal.

The feature signal includes one or more of a pulse signal, a peak signal, a rising edge signal, and a waveform center-of-mass signal.

The background signal is a signal other than the feature signal in the at least one echo signal.

In another possible implementation of the fourth aspect, the feature signal in the at least one echo signal is used to obtain the point cloud data corresponding to the detection region.

The background signal in the at least one echo signal is used to obtain the image corresponding to the detection region.

According to a fifth aspect, an embodiment of this application provides a detection apparatus. The detection apparatus includes a laser transmitter and a detector. The detector includes a first detection module and a second detection module.

The laser transmitter is configured to generate a transmit signal.

The detector is configured to receive an optical signal and obtain an echo signal.

The first detection module is configured to detect a first optical signal and obtain at least one first echo signal, where the first optical signal includes a return signal obtained by detecting a detection region by using the transmit signal.

The second detection module is configured to detect a second optical signal and obtain at least one second echo signal, where the second optical signal includes a background optical signal from the detection region.

The at least one first echo signal and the at least one second echo signal are used to obtain a detection result of the detection region.

In a possible implementation of the fifth aspect, the at least one first echo signal is used to obtain point cloud data corresponding to the detection region, the at least one second echo signal is used to obtain an image corresponding to the detection region, and the detection result of the detection region includes enhanced point cloud data of the detection region.

In another possible implementation of the fifth aspect, a quantity of points in the enhanced point cloud data is greater than a quantity of points in the point cloud data that corresponds to the detection region and that is obtained by processing the at least one first echo signal.

In another possible implementation of the fifth aspect, the detector includes P×Q detection elements, P is a quantity of rows of detection elements included in the detector, and Q is a quantity of columns of detection elements included in the detector.

In another possible implementation of the fifth aspect, the first detection module and the second detection module each include a plurality of detection elements.

According to a sixth aspect, an embodiment of this application provides a detection apparatus. The detection apparatus includes a laser transmitter and a detector.

The laser transmitter is configured to generate a transmit signal.

The detector is configured to receive an optical signal and obtain at least one echo signal, where the optical signal includes a return signal obtained by detecting a detection region by using the transmit signal.

The at least one echo signal is used to obtain point cloud data corresponding to the detection region and an image corresponding to the detection region.

In a possible implementation of the sixth aspect, the at least one echo signal includes a feature signal and a background signal.

The feature signal includes one or more of a pulse signal, a peak signal, a rising edge signal, and a waveform center-of-mass signal.

The background signal is a signal other than the feature signal in the at least one echo signal.

In another possible implementation of the sixth aspect, the feature signal in the at least one echo signal is used to obtain the point cloud data corresponding to the detection region.

The background signal in the at least one echo signal is used to obtain the image corresponding to the detection region.

According to a seventh aspect, an embodiment of this application provides a signal processing apparatus. The signal processing apparatus is configured to implement the method according to any implementation of the first aspect.

In a possible implementation of the seventh aspect, the signal processing apparatus includes a signal obtaining module and a processing module.

The signal obtaining module is configured to obtain at least one first echo signal from a first detection module, where the first echo signal is obtained by using a first optical signal detected by the first detection module, and the first optical signal includes a return signal obtained by detecting a detection region by using a transmit signal.

The signal obtaining module is further configured to obtain at least one second echo signal from a second detection module, where the second echo signal is obtained by using a second optical signal detected by the second detection module, and the second optical signal includes a background optical signal from the detection region.

The first detection module and the second detection module are included in a same detector.

The processing module is configured to obtain a detection result of the detection region based on the at least one first echo signal and the at least one second echo signal.

In a possible implementation of the seventh aspect, the processing module is further configured to:
process the at least one first echo signal to obtain point cloud data corresponding to the detection region; and
process the at least one second echo signal, and image the detection region, to obtain an image corresponding to the detection region.

In another possible implementation of the seventh aspect, the processing module is further configured to:
obtain enhanced point cloud data of the detection region based on the point cloud data corresponding to the detection region and the image corresponding to the detection region.

In another possible implementation of the seventh aspect, a quantity of points in the enhanced point cloud data is greater than a quantity of points in the point cloud data that corresponds to the detection region and that is obtained by processing the at least one first echo signal.

In another possible implementation of the seventh aspect, the processing module is further configured to:
filter out, based on a contour that is of a target object in the detection region and that is indicated by the image of the detection region, noise in the point cloud data corresponding to the detection region, to obtain the enhanced point cloud data.

In another possible implementation of the seventh aspect, the processing module is further configured to:

obtain a size of the target object in the detection region based on the enhanced point cloud data.

In another possible implementation of the seventh aspect, the enhanced point cloud data is specifically enhanced point cloud data in an overlapping region, and the overlapping region is an overlapping region between the point cloud data of the detection region and the image of the detection region.

In another possible implementation of the seventh aspect, the processing module is further configured to:
perform enhancement on the image of the detection region based on the point cloud data of the detection region, to obtain an enhanced image of the detection region.

Enhancement includes one or more of the following operations:
shadow removal, noise reduction, contrast enhancement, overexposure removal, or underexposure compensation.

In another possible implementation of the seventh aspect, the processing module is further configured to:
obtain a fusion detection result of the detection region based on the point cloud data of the detection region and the image of the detection region.

For another example, when a pixel granularity of the image is smaller, the image has better resolution than the point cloud data. The enhanced point cloud data obtained by fusing the image and the point cloud data has higher resolution than the point cloud data. Therefore, resolution of the detection result is improved.

In another possible implementation of the seventh aspect, the detector includes P×Q detection elements, P is a quantity of rows of detection elements included in the detector, and Q is a quantity of columns of detection elements included in the detector.

In another possible implementation of the seventh aspect, the first detection module and the second detection module each include a plurality of detection elements.

In another possible implementation of the seventh aspect, the at least one first echo signal obtained from the first detection module includes a plurality of first pixels, a quantity of detection elements corresponding to the first pixels is M, and M is a positive integer;
the at least one second echo signal obtained from the second detection module includes a plurality of second pixels, a quantity of detection elements corresponding to the first pixels is N, and N is a positive integer; and
M is greater than N.

In another possible implementation of the seventh aspect, the at least one first echo signal is obtained by the first detection module through detection at at least one scanning angle; and
the at least one second echo signal is obtained by the second detection module through detection at at least one scanning angle.

According to an eighth aspect, an embodiment of this application provides a signal processing apparatus. The signal processing apparatus is configured to implement the method according to any implementation of the first aspect.

In a possible implementation of the eighth aspect, the signal processing apparatus includes a signal obtaining module and a processing module.

The signal obtaining module is configured to obtain at least one echo signal from a detector, where the at least one echo signal is obtained by using an optical signal detected by the detector, and the optical signal includes a return signal obtained by detecting a detection region by using a transmit signal.

The processing module is configured to obtain, based on the at least one echo signal, point cloud data corresponding to the detection region and an image corresponding to the detection region.

The processing module is further configured to obtain a detection result of the detection region based on the point cloud data corresponding to the detection region and the image corresponding to the detection region.

In another possible implementation of the eighth aspect, the at least one echo signal includes a feature signal and a background signal.

The feature signal includes one or more of a pulse signal, a peak signal, a rising edge signal, and a waveform center-of-mass signal.

The background signal is a signal other than the feature signal in the at least one echo signal.

In another possible implementation of the eighth aspect, the processing module is further configured to:
obtain, based on the feature signal in the at least one echo signal, the point cloud data corresponding to the detection region; and
obtain, based on the background signal in the at least one echo signal, the image corresponding to the detection region.

In another possible implementation of the eighth aspect, the processing module is further configured to:
obtain enhanced point cloud data of the detection region based on the point cloud data corresponding to the detection region and the image corresponding to the detection region.

In another possible implementation of the eighth aspect, a quantity of points in the enhanced point cloud data is greater than a quantity of points in the point cloud data that corresponds to the detection region and that is obtained by processing the at least one first echo signal.

In another possible implementation of the eighth aspect, the processing module is further configured to:
filter out, based on a contour that is of a target object in the detection region and that is indicated by the image of the detection region, noise in the point cloud data corresponding to the detection region, to obtain the enhanced point cloud data.

In another possible implementation of the eighth aspect, the processing module is further configured to:
obtain a size of the target object in the detection region based on the enhanced point cloud data.

In another possible implementation of the eighth aspect, the enhanced point cloud data is specifically enhanced point cloud data in an overlapping region, and the overlapping region is an overlapping region between the point cloud data of the detection region and the image of the detection region.

In another possible implementation of the eighth aspect, the processing module is further configured to:
perform enhancement on the image of the detection region based on the point cloud data of the detection region, to obtain an enhanced image of the detection region.

Enhancement includes one or more of the following operations:
shadow removal, noise reduction, contrast enhancement, overexposure removal, or underexposure compensation.

In another possible implementation of the eighth aspect, the processing module is further configured to:
obtain a fusion detection result of the detection region based on the point cloud data of the detection region and the image of the detection region.

For another example, when a pixel granularity of the image is smaller, the image has better resolution than the point cloud data. The enhanced point cloud data obtained by fusing the image and the point cloud data has higher resolution than the point cloud data. Therefore, resolution of the detection result is improved.

In another possible implementation of the eighth aspect, the detector includes P×Q detection elements, P is a quantity of rows of detection elements included in the detector, and Q is a quantity of columns of detection elements included in the detector. In another possible implementation of the eighth aspect, the at least one echo signal is obtained by the detector through detection at at least one scanning angle.

According to a ninth aspect, an embodiment of this application provides a signal processing apparatus. The signal processing apparatus includes a processor and a communication interface. The communication interface is configured to receive and/or send data, and/or the communication interface is configured to provide an input and/or an output for the processor. The processor is configured to implement the method described in any implementation of the first aspect; or configured to implement the method described in any implementation of the second aspect; or configured to implement the method described in any implementation of the third aspect; or configured to implement the method described in any implementation of the fourth aspect.

It should be noted that the processor included in the signal processing apparatus described in the eleventh aspect may be a processor specially configured to perform these methods (referred to as a dedicated processor for ease of differentiation), or may be a processor that executes these methods by invoking a computer program, for example, a general-purpose processor. Optionally, the at least one processor may further include both a dedicated processor and a general-purpose processor.

Optionally, the computer program may be stored in a memory. For example, the memory may be a non-transitory (non-transitory) memory, for example, a read-only memory (Read Only Memory, ROM). The memory and the processor may be integrated on a same component, or may be separately disposed on different components. A type of the memory and a manner of disposing the memory and the processor are not limited in embodiments of this application.

In a possible implementation, the at least one memory is located outside the signal processing apparatus.

In another possible implementation, the at least one memory is located inside the signal processing apparatus.

In another possible implementation, some memories of the at least one memory are located inside the signal processing apparatus, and the other memories are located outside the signal processing apparatus.

In this application, the processor and the memory may alternatively be integrated into one component. In other words, the processor and the memory may alternatively be integrated together.

Optionally, the signal processing apparatus may be included in a device like a lidar, an optical ranging apparatus, or a fusion detection apparatus (where the fusion detection apparatus usually includes at least two detectors, for example, may be an apparatus including a lidar and an image sensor).

According to a tenth aspect, an embodiment of this application provides a chip system. The chip system includes a processor and a communication interface. The communication interface is configured to receive and/or send data, and/or the communication interface is configured to provide an input and/or an output for the processor. The chip system is configured to implement the method described in any implementation of the first aspect; or configured to implement the method described in any implementation of the second aspect; or configured to implement the method described in any implementation of the third aspect; or configured to implement the method described in any implementation of the fourth aspect.

According to an eleventh aspect, an embodiment of this application provides a computer-readable storage medium. The computer-readable storage medium stores instructions, and when the instructions are run on at least one processor, the method described in any implementation of the first aspect to the fourth aspect is implemented.

According to a twelfth aspect, this application provides a computer program product. The computer program product includes computer instructions, and when the instructions are run on at least one processor, the method described in any implementation of the first aspect to the fourth aspect is implemented.

Optionally, the computer program product may be a software installation package. When the foregoing method needs to be used, the computer program product may be downloaded and executed on a computing device.

According to a thirteenth aspect, an embodiment of this application provides a terminal, where the terminal includes the apparatus described in any implementation of the fifth aspect to the eighth aspect.

Optionally, the terminal is a vehicle, an uncrewed aerial vehicle, or a robot.

For beneficial effect of the technical solutions provided in the second aspect to the thirteenth aspect of this application, refer to beneficial effect of the technical solutions provided in the first aspect and the second aspect. Details are not described herein again.

### BRIEF DESCRIPTION OF DRAWINGS

The following describes the accompanying drawings used in embodiments of this application.
FIG. 1 is a schematic diagram of an architecture of a laser detection system according to an embodiment of this application;
FIG. 2 and FIG. 3 are schematic working diagrams of some possible laser transmitters according to an embodiment of this application;
FIG. 4A and FIG. 4B are schematic working diagrams of some other possible laser transmitters according to an embodiment of this application;
FIG. 5 and FIG. 6 each are a schematic diagram of detection according to an embodiment of this application;
FIG. 7 is a schematic diagram of point cloud data according to an embodiment of this application;
FIG. 8 is a schematic diagram of some possible detectors according to an embodiment of this application;
FIG. 9(a) and FIG. 9(b) are schematic diagrams of a detection process according to an embodiment of this application;
FIG. 10 is a schematic diagram of a detection apparatus according to an embodiment of this application;
FIG. 11 is a schematic flowchart of a signal processing method according to an embodiment of this application;
FIG. 12A is a schematic diagram of a transmitting process of a detection apparatus according to an embodiment of this application;
FIG. 12B is a schematic diagram of a receiving process of a detection apparatus according to an embodiment of this application;
FIG. 13 is a schematic diagram of a detector according to an embodiment of this application;
FIG. 14 is a schematic diagram of a first echo signal according to an embodiment of this application;
FIG. 15 is a schematic diagram of another possible detector according to an embodiment of this application;
FIG. 16A is a schematic diagram of a first echo signal according to an embodiment of this application;
FIG. 16B is a schematic diagram of a second echo signal according to an embodiment of this application;
FIG. 17 is a schematic diagram of point cloud data of a detection region according to an embodiment of this application;
FIG. 18 is a schematic diagram of an image of a detection region according to an embodiment of this application;
FIG. 19 is a schematic diagram of possible enhanced point cloud data according to an embodiment of this application;
FIG. 20 is a flowchart of a noise filtering method according to an embodiment of this application;
FIG. 21 is a schematic diagram of determining noise according to an embodiment of this application;
FIG. 22 is a schematic diagram of determining an object size according to an embodiment of this application;
FIG. 23(a) and FIG. 23(b) are schematic diagrams of point cloud data and enhanced point cloud data according to an embodiment of this application;
FIG. 24 is a schematic diagram of enhanced point cloud data according to an embodiment of this application;
FIG. 25 is a schematic flowchart of obtaining a detection result according to an embodiment of this application;
FIG. 26 is another schematic flowchart of obtaining a detection result according to an embodiment of this application;
FIG. 27 is a flowchart of another method for obtaining a detection result according to an embodiment of this application;
FIG. 28 is a schematic diagram of a detection region according to an embodiment of this application;
FIG. 29 is a schematic flowchart of a signal processing method according to an embodiment of this application;
FIG. 30 is a schematic diagram of an echo signal according to an embodiment of this application;
FIG. 31 is a schematic flowchart of another signal processing method according to an embodiment of this application;
FIG. 32 is a schematic diagram of a structure of a signal processing apparatus according to an embodiment of this application; and
FIG. 33 is a schematic diagram of a structure of another signal processing apparatus according to an embodiment of this application.

### DESCRIPTION OF EMBODIMENTS

The following describes embodiments of this application in detail with reference to the accompanying drawings.

For ease of understanding, the following provides example descriptions of some concepts related to embodiments of this application for reference. Details are as follows:

### 1. Detection apparatus

The detection apparatus mentioned in embodiments of this application may be a lidar, or may be another optical detection apparatus, for example, a fusion detection apparatus (for example, a detection apparatus integrating a radar detector and an image sensor). A working principle of the detection apparatus is to detect a corresponding detection region by transmitting an optical signal and receiving an optical signal returned by the detection region. In embodiments of this application, a signal transmitted by the detection apparatus is referred to as a transmit signal, and an optical signal returned after the detection region reflects the transmit signal is referred to as a return signal.

The detection apparatus in embodiments of this application can be used in various fields such as intelligent driving, intelligent transportation, intelligent manufacturing, environment monitoring, surveying and mapping, and an uncrewed aerial vehicle, and can complete one or more functions of target detection, distance measurement, speed measurement, target tracking, imaging recognition, and the like.

The detection apparatus in embodiments of this application may be used in a vehicle-mounted detection apparatus (for example, a vehicle-mounted radar), a roadside detection apparatus (for example, an intersection radar), or the like, and may also be used in another detection apparatus, for example, a detection apparatus installed on an apparatus like an uncrewed aerial vehicle, a robot, a rail vehicle, a bicycle, a signal light, a speed measurement apparatus, or a base station. An installation location of the detection apparatus is not limited in this application.

The optical signal received by a detector of the detection apparatus includes a return signal (a reflected signal corresponding to the transmit signal), and may further include a background optical signal (for example, which may be an optical signal directly from an ambient light source, or may be a reflected signal obtained by reflecting an optical signal of an ambient light source). The ambient light source may include one or more of a natural light source (for example, the sun), an artificial light source (for example, a street lamp, a car light, or a light source of another light detection apparatus), or the like.

### 2. Detection region

The detection region is a physical world that can be detected, also referred to as a field of view (field of view, FOV). During detection, there is a need for a line-of-sight (line of sight, LOS) region with uninterrupted signal (for example, a radio wave or laser light) transmission between a transmit module and a target object or between a receive module and a target object. The line-of-sight region may be understood as the detection region. A signal from the detection region may be transmitted to a receiver, and/or a signal transmitted by a detection apparatus may be transmitted to an object in the detection region.

### 3. Time of flight

The time of flight (Time of Flight, ToF) is time required for a laser transmitter to send a light pulse to a target object and then a detector to receive light reflected from the target object. A distance between the target object and the detection apparatus can be obtained based on a speed of light and the ToF. A ToF measurement technology may include a single-laser-pulse technology, a multi-laser-pulse technology, or the like. In the single-laser-pulse technology, measured time of flight is return time of a single pulse, and has a high requirement on a signal-to-noise ratio (signal-to-noise ratio, SNR, or referred to as S/N). In the multi-laser-pulse technology, return time of a plurality of pulses is measured each time, and detection data is obtained through a photon counting histogram.

### 4. Echo signal

In embodiments of this application, an electrical signal output by a detector based on an optical signal is referred to as an echo signal, or an electrical signal is processed (for example, analog-digital conversion or filtering) to obtain an echo signal. The optical signal used to obtain the echo signal may include a return signal of a signal transmitted by a detection apparatus, a background optical signal, or the like.

### 5. Feature signal and background signal

A detection apparatus detects a detection region by transmitting a signal, and there may be or may not be a target in the detection region. When a target exists, the target may reflect the transmit signal to obtain a return signal corresponding to the transmit signal.

The detection apparatus receives an optical signal from the detection region, to obtain an echo signal. The echo signal includes both a signal corresponding to the return signal and a signal corresponding to a background optical signal. Optionally, the echo signal may further include a signal corresponding to an optical signal reflected by an optical element of the detection apparatus, a current noise signal, or the like.

A signal formed by the return signal usually has a feature in waveform. Therefore, a detection rule may be set based on the feature, and a signal corresponding to a possible return signal in the echo signal is filtered according to the detection rule. In embodiments of this application, a signal that meets the detection rule may be referred to as a feature signal. In other words, the feature signal usually has a special waveform feature, and may be a signal corresponding to the return signal.

For example, the feature signal may include one or more of a pulse signal, a peak signal, a rising edge signal (or referred to as a front-porch signal), a waveform center-of-mass signal, or the like. The pulse signal is a signal that fluctuates for a short time like a sphygmus signal. The peak signal is a signal corresponding to a highest value of a signal value in a period of time. The rising edge signal is a segment of a signal whose signal value continuously increases in a period of time. The waveform center-of-mass signal is a signal corresponding to a center-of-mass location of waveform information.

For another example, a waveform feature of the signal formed by the return signal is obtained through presetting, pre-configuration, or computing, and a signal that meets the feature may be detected.

Optionally, the feature signal may reflect information such as a distance to the target, or coordinates, a location, a color, a reflectivity, a reflection intensity, or a speed of the target. Alternatively, the feature signal may be processed to obtain information such as a distance to the target, or coordinates, a location, a color, a reflectivity, a reflection intensity, or a speed of the target.

It should be noted that, there may be or may not be a target in the detection region, and the signal that meets the detection rule may correspond to a target, or may not correspond to a real target. In other words, the feature signal may not completely match the real target in the detection region, and a matching degree is limited by a manufacturing process, a signal processing capability, and an actual detection environment.

The background signal may also be referred to as a noise signal. The background signal may be a signal formed due to background light, an interference signal, current noise, or the like of the detection region.

In some scenarios, the background signal is understood as a signal other than the feature signal in the echo signal. For example, the background signal may be obtained by filtering out the feature signal in the echo signal.

### 6. Image resolution (resolution)

The image resolution indicates an amount of information included in an image. For example, the image resolution may indicate a quantity of pixels in an image per inch, and in this case, a unit of the image resolution is pixel per inch (Pixels Per Inch, PPI).

Certainly, the image resolution may also be indicated in another form. For example, the image resolution may also be expressed in a manner of "a quantity of horizontal pixels×a quantity of vertical pixels", or may be represented by using a specification code.

It should be noted that, in different application scenarios, the image resolution may be referred to differently. For example, in some scenarios, the image resolution may also be referred to as "image size", "image dimensions", "pixel size", "recording resolution", or the like. Alternatively, for descriptions related to the image resolution, refer to related descriptions well-known in the art.

### 7. Angular resolution (angular resolution or angle differentiate)

The angular resolution is a resolution capability of a detection system, namely, a capability of the detection system to distinguish a minimum distance between two adjacent objects differently. In the radar field, if the angular resolution is 0.01 radians (which is converted to 0.6 degrees), resolution of 1 meter can be obtained at a distance of 100 meters. If the angular resolution is 0.001 radians, a resolution capability of 1 meter can be obtained at a distance of 1000 meters.

The angular resolution of the detection system may also directly represent resolution of the detection system. Generally, higher angular resolution indicates higher precision of a detection result, and therefore, higher resolution of the detection result.

### 8. Point cloud data and points

The point cloud data is a set of points obtained through detection. The point cloud data is recorded in a form of a point. The point in the point cloud data includes coordinates, and may further include reflection intensity information, color information, or the like.

The intensity information corresponds to a detected echo intensity, and is related to a surface material, roughness, and an incident angle of the detected object, energy and a wavelength of a transmit signal of a detection apparatus, or the like.

### 9. Imaging principle

A detection element receives a photon, forms a voltage signal and/or a current signal based on the photon, and then converts the voltage signal and/or the current signal into a pixel. A larger quantity of photons indicates a higher voltage signal and/or a higher current signal, and a brighter corresponding pixel, so that a brightness change is formed to obtain an image.

The foregoing example descriptions of the concepts may be applied in the following embodiments.

The following describes an application scenario and an architecture of this application.

With development of information technologies and computer vision, the detection technologies have developed rapidly, and various detection apparatuses bring great convenience to people's life and travel. For example, an advanced driving assistance system (Advanced Driving Assistance System, ADAS) plays an important role in intelligent vehicles. In a driving process of a vehicle, the advanced driving assistance system uses a detection apparatus installed on the vehicle to detect an ambient environment, collect data, recognize static and moving objects, and perform system computing and analysis based on map data of a navigator. In this way, a driver is aware of a possible danger in advance, to effectively improve comfort and safety of driving the vehicle.

The detection apparatus may be considered as an "eye" for an electronic device to sense an environment, and includes a visual sensor like a camera and a radar sensor like a millimeter-wave radar, a lidar, and an ultrasonic radar.

The following uses a laser detection system as an example to describe a system and an apparatus in embodiments of this application.

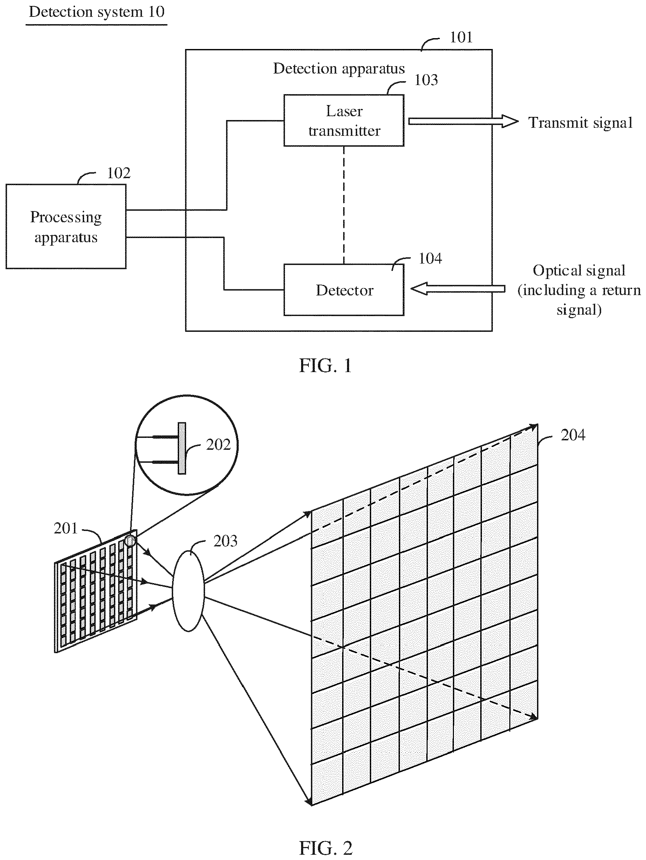

Refer to FIG. 1. FIG. 1 is a schematic diagram of an architecture of a laser detection system 10 according to an embodiment of this application. As shown in FIG. 1, the laser detection system 10 may include a detection apparatus 101 and a processing apparatus 102. The detection apparatus 101 is configured to: emit laser light and receive an optical signal, and the processing apparatus 102 is configured to perform computing, data processing, or the like. The apparatuses are described in detail as follows:
(1) The detection apparatus 101 may specifically include a laser transmitter 103 and a detector 104. Optionally, the detection apparatus 101 may further include one or more optical elements (not shown in the figure), for example, may include one or more of the following optical elements: a shaping component (for example, a collimating apparatus or an optical path shaping component), a reflection mirror, a lens, a window, a spectroscope, a swing mirror, a polygon (Polygon) mirror, or a micro-oscillating mirror, a polarizer, a filter, a homogenizer, or the like of a micro-electro-mechanical system (Micro-Electro-Mechanical System, MEMS). In the detection apparatus in embodiments of this application, a quantity, placement locations, placement sequences, sizes, and the like of optical elements in the detection apparatus are not limited.
(1.1) The laser transmitter 103 is configured to transmit an optical signal. Optionally, the laser transmitter 103 may include one or more light emitting elements. For example, the laser transmitter 103 may include one or more of the following lasers: a semiconductor laser, an optical fiber laser, a gas laser, or the like. The semiconductor laser may specifically include a light emitting element like a laser diode (laser diode, LD), a vertical cavity surface emitting laser (Vertical Cavity Surface Emitting Laser, VCSEL), an edge-emitting laser (edge-emitting laser, EEL), a distributed feedback laser diode (distributed feedback LD, DFB-LD), a distributed Bragg reflection laser diode (distributed Bragg reflection LD, DBR-LD), a grating coupled sampling reflection laser diode (Grating coupled sampling reflection LD, GCSR-LD), a micro-opto-electro-mechanical system laser diode (micro-opto-electro-mechanical system LD, MOEMS-LD), or the like.

The optical signal transmitted by the laser transmitter 103 may irradiate to a detection region through one or more optical elements. The following enumerates three possible designs of a transmitting process.

Design 1: The laser transmitter 103 may be an array light source. Refer to FIG. 2. FIG. 2 is a schematic working diagram of a possible laser transmitter according to an embodiment of this application. A laser transmitter 201 is an 8×8 array light source formed by 64 light emitting elements. As shown in FIG. 2, each small grid in the laser transmitter 201 is a light emitting element 202. The laser transmitter 201 irradiates a detection region 204 through an optical element 203. The array light source can irradiate to obtain an illumination lattice, and can provide a uniform irradiation field of view, thereby improving a detection effect.

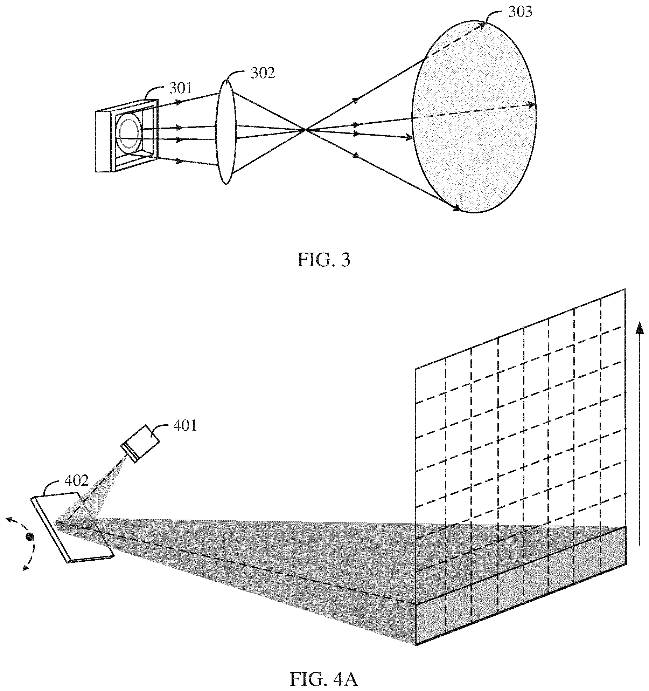

Design 2: The laser transmitter 103 may include one light emitting unit. Refer to FIG. 3. FIG. 3 is a schematic working diagram of another possible laser transmitter according to an embodiment of this application. A laser transmission unit 301 includes one light emitting element, and an optical signal transmitted by the light emitting element irradiates into a detection region 303 through an optical device 302.

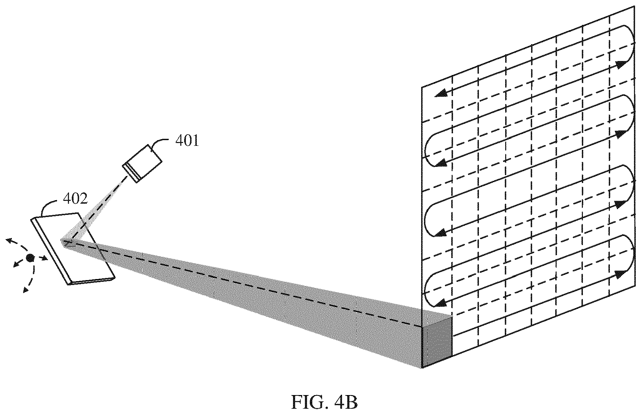

Design 3: The optical signal transmitted by the laser transmitter 103 may irradiate to the detection region through a scanning mechanism. Refer to FIG. 4A and FIG. 4B. FIG. 4A and FIG. 4B each are a schematic working diagram of a possible laser transmitter according to an embodiment of this application. An optical signal transmitted by a laser transmitter 401 may irradiate to one sub-region of a detection region at one or more angles through a scanning mechanism 402. The scanning mechanism 402 may include one or more of a polygon mirror, a micro-oscillating mirror, a swing mirror, or the like. A scanning form of the scanning mechanism 402 may include a scanning form like spot scanning or line scanning. A scanning sequence of the scanning mechanism is not limited in this application. For example, the scanning sequence may be from top to bottom, from bottom to top, or from left to right.

For example, FIG. 4A is a schematic diagram of line scanning. The scanning mechanism may adjust an angle in one direction to perform scanning detection on the detection region. Further, line scanning may be, for example, in a scanning form like row scanning or column scanning. FIG. 4B is a schematic diagram of spot scanning. The scanning mechanism may adjust angles in two directions to perform scanning detection on the detection region. Further, scanning may start from any "point". FIG. 4B is merely an example.

It should be understood that transmit optical paths shown in FIG. 2 to FIG. 4B are merely examples. A laser signal transmitted in a specific implementation process may pass through one or more optical elements in the detection apparatus.

(1.2) The detector 104 is configured to receive an optical signal. Further, the detector 104 may obtain an electrical signal based on the optical signal. Optionally, the electrical signal may be output as an echo signal, or an echo signal obtained by processing the electrical signal is output.

Optionally, the detector 104 may include one or more detection elements. For example, the detector 102 may include one or more of the following detection elements: a single-photon avalanche diode (single-photon avalanche diode, SPAD), a silicon photomultiplier (Silicon photomultiplier, SiPM), a semiconductor avalanche photodiode (avalanche photodiode, APD), a multi-pixel photon counter (multi-pixel photon counter, MPPC), an electron multiplying charge-coupled device (electron multiplying charge-coupled device, EMCCD), or the like.

Further, when the detector includes a plurality of detection elements, the plurality of detection elements may be arranged in an array. For example, the array may be an array of a specification like a 1×2 array, a 2×3 array, or a 3×3 array. A quantity of rows and a quantity of columns arranged in the array are not limited in this application. Optionally, when the detector includes a plurality of detection elements, and the detector is working, a case in which only a part of the detection elements are in a working state may occur. In this case, another part of the detection elements are in a non-working state (for example, a reserved state).

It should be noted that in a receiving process, the optical signal may optionally pass through one or more optical elements. Optionally, when the electrical signal is obtained based on the optical signal, a detection element in the detector may convert the optical signal into the electrical signal, or another conversion unit other than the detection element in the detector may convert the optical signal into the electrical signal. This is not specifically limited herein.

(2) The processing apparatus 102 is configured to process output data (for example, an electrical signal or an echo signal) obtained by the detection apparatus, or the processing apparatus 102 may be further configured to control a component in the detection apparatus 101.

The processing apparatus 102 may include one or more processors. It should be understood that, in this embodiment of this application, for ease of describing a computing function, the processor is used for description. In a specific implementation process, the processing apparatus 102 may include an apparatus having a computing function. For example, the processing apparatus 102 may include one or more of the following apparatuses: a central processing unit (central processing unit, CPU), an application processor (application processor, AP), a time-to-digital converter (Time-to-Digital Converter, TDC), a filter, a graphics processing unit (graphics processing unit, GPU), a microprocessor unit (microprocessor unit, MPU), an application-specific integrated circuit (Application-Specific Integrated Circuit, ASIC), an image signal processor (image signal processor, ISP), a digital signal processor (digital signal processor, DSP), a field programmable gate array (Field Programmable Gate Array, FPGA), a complex programmable logic device (Complex programmable logic device, CPLD), a coprocessor (assisting a central processing unit in completing corresponding processing and application), a microcontroller unit (Microcontroller Unit, MCU), a neural-network processing unit (neural-network processing unit, NPU), and/or the like.

Optionally, the processing apparatus 102 may be located inside the detection apparatus 101, or may be located outside the detection apparatus 101.

Alternatively, in some designs, the processing apparatus 102 may include a plurality of components, where some components are located inside the detection apparatus 101, and some components are located outside the detection apparatus 101. For example, the processing apparatus 102 may include a digital-to-analog conversion module, a filtering module, a TOF de-conversion module, and a point cloud generation module. The digital-to-analog conversion module, the filtering module, and the TOF de-conversion module are located inside the detection apparatus 101, and the point cloud generation module is located outside the detection apparatus.

When the detection apparatus 101 performs detection, the laser transmitter 103 generates a transmit signal to irradiate a detection region, and a target object in the detection region may reflect an optical signal, so as to obtain a return signal of the transmit signal. The detector 104 receives the optical signal from the detection region. The optical signal from the detection region includes the return signal of the transmit signal. The detection apparatus may determine distance information of the target object in the detection region based on a time interval between the transmit signal and the return signal of the transmit signal, to form one or more points. Further, information such as a reflection intensity of the target object in the detection region may be further obtained based on information such as an energy intensity of the return signal.

However, distance information of a plurality of points in the detection region may be obtained in a form of an array unit, scanning detection, and the like, to obtain point cloud data of the detection region. The point cloud data includes a plurality of points. The following separately describes array detection and scanning detection by using examples. It should be understood that a quantity, placement sequences, sizes, and the like of optical elements in the detection apparatus shown below are merely examples.

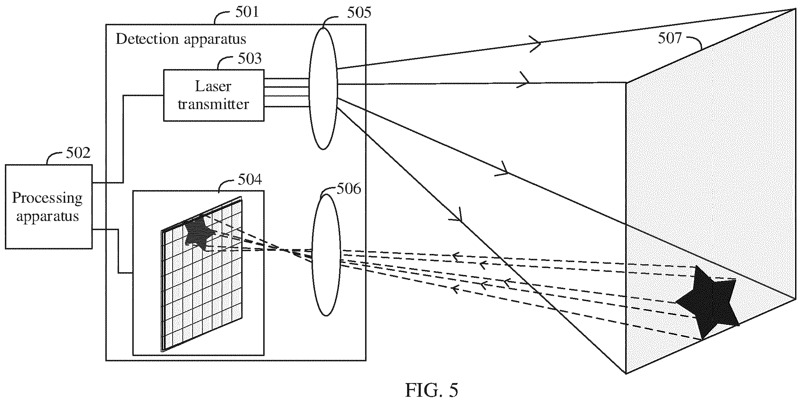

A form of an array unit is used as an example. Refer to FIG. 5. FIG. 5 is a possible schematic diagram of detection according to an embodiment of this application. As shown in FIG. 5, when a detection apparatus 501 performs detection, a laser transmitter 503 generates a transmit signal, and the transmit signal irradiates to a detection region 507 through an optical element 505. An optical signal from the detection region 507 is received by a detector 504 through an optical element 506. Point cloud data corresponding to the detection region 507 may be obtained in a form of a multi-element array. In a design, the detector 504 may output an electrical signal to a processing apparatus 502, and the processing apparatus 502 obtains the point cloud data of the detection region 507 based on the electrical signal obtained from the detector 504.

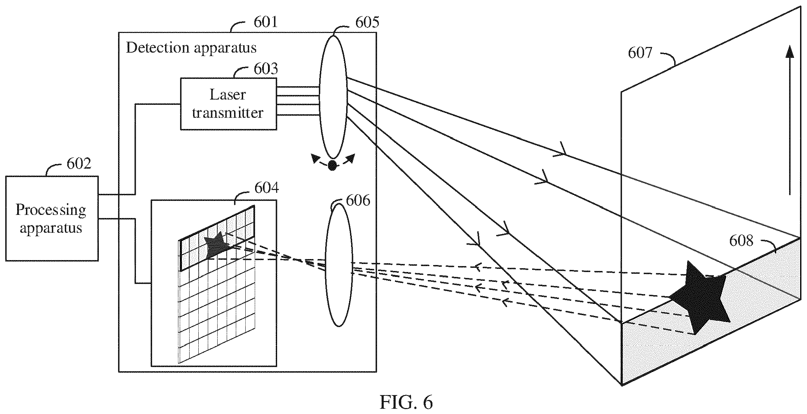

A form of scanning detection is used as an example. Refer to FIG. 6. FIG. 6 is another possible schematic diagram of detection according to an embodiment of this application. As shown in FIG. 6, when a detection apparatus 601 performs detection, a laser transmitter 603 generates a transmit signal, and the transmit signal irradiates to one sub-region 608 of a detection region 607 at a plurality of angles through a scanning mechanism 605. An optical signal from the sub-region 608 of the detection region 607 is received by a detector 604 through an optical element 606. The scanning mechanism 605 may form a plurality of angles, to complete detection of the detection region 607. Distance information and reflection intensity information of the detection region 507 may be obtained by measuring round-trip time of the optical signal. However, point cloud data corresponding to the detection region 607 may be obtained in a form of scanning detection. In a design, the detector 604 may output an electrical signal to a processing apparatus 602, and the processing apparatus 602 obtains the point cloud data of the detection region based on the electrical signal obtained from the detector 604.

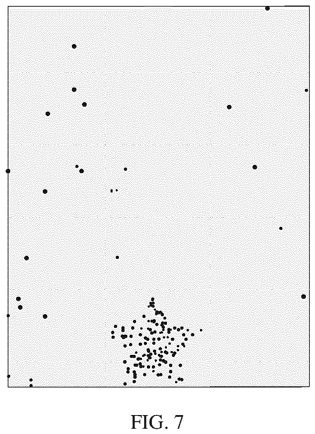

A detection result with high ranging precision may be obtained by using the detection apparatus shown above. However, in some cases, limited by performance of the detection apparatus, angular resolution of the detection apparatus is low, and a high-resolution detection result cannot be obtained. For example, refer to FIG. 7. FIG. 7 is a schematic diagram of possible point cloud data according to an embodiment of this application. FIG. 7 shows point cloud data of a detection region obtained by using the detection process shown in FIG. 5 or FIG. 6, where a capability of distinguishing an object by using point cloud distribution is poor, angular resolution of the detection apparatus is poor, and the point cloud data obtained by the detection apparatus is also fuzzy. In this case, a high-resolution detection result cannot be obtained.

In view of this, embodiments of this application provide a signal processing method, a detection method, and a related apparatus. According to implementation of this application, detection resolution can be improved, and detection performance of a lidar can be improved. The method provided in embodiments of this application may be applied to the foregoing detection system 10, or may be specifically applied to the detection apparatus 101 or the processing apparatus 102.

In a design of embodiments of this application, the detector 104 of the detection apparatus 101 includes a first detection module and a second detection module. Data obtained by the first detection module through detection is used to obtain point cloud data, and data obtained by the second detection module through detection is used to obtain an image. The processing apparatus 102 may perform processing based on the point cloud data and the image to obtain a detection result of a detection region. Because the detection result is obtained based on the point cloud data and the image, and the image may be used to supplement information about the detection region, the detection result has higher resolution than a detection result obtained based on the point cloud data. However, the first detection module and the second detection module are included in a same detector, and a field of view detection angle deviation is small. Therefore, when the detection result of the detection region is obtained through processing, computing complexity of calibration and registration can be reduced, and detection performance of the detection apparatus can be improved.

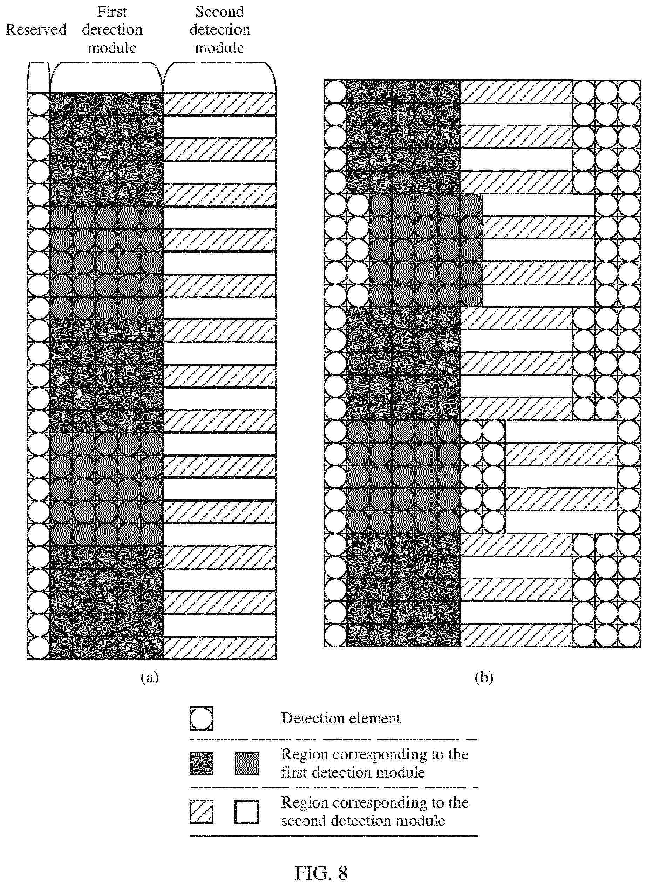

For example, refer to FIG. 8. FIG. 8 is a schematic diagram of some possible detectors according to an embodiment of this application. The detectors shown in FIG. 8 may be applied to the foregoing detection apparatus, for example, applied to the detection apparatus 101, the detection apparatus 501, and/or the detection apparatus 601. As shown in (a) in FIG. 8, a detector includes 275 detection elements in 25 rows and 11 columns, where a first column includes detection elements in a reserved state, second to sixth columns are included in a first detection module, and seventh to eleventh columns are included in a second detection module. During detection, a signal obtained by a detection element in a first detection region through detection is used to obtain point cloud data, and a signal obtained by a detection element in a first detection region through detection is used to obtain an image. The image may be used to supplement information about the detection region. Therefore, compared with a detection result obtained based on the point cloud data, an obtained detection result has higher resolution, and the detection apparatus has higher angular resolution.

It should be understood that (a) in FIG. 8 is merely an example. In a specific implementation process, there may be a plurality of designs for a quantity of detection elements included in the first detection module and a distribution region of the detection elements. Similarly, there may also be a plurality of designs for a quantity of detection elements included in the second detection module and a distribution region of the detection elements.

For example, as shown in (b) in FIG. 8, a detector includes 325 detection elements in 25 rows and 13 columns, where detection elements in dark regions (including dark regions of two degrees) are included in a first detection module, and detection elements in a stripe region and a white region are included in a second detection module.

For another example, the detection apparatus 101 includes a control apparatus, or the processing apparatus 102 includes a control apparatus, or the detection apparatus 101 is connected to a control apparatus. The control apparatus may determine the detection elements included in the first detection module and the detection element included in the second detection module. The control apparatus may be configured to determine a detection element included in a detection module, so that a region in which point cloud data is obtained and a region in which an image is obtained can be flexibly adjusted, so as to improve performance of the detection apparatus. Further, optionally, the region in which the point cloud data is obtained and the region in which the image is obtained may be adjusted based on weather, temperature and humidity, another factor that affects a detection result, or the like, to improve a detection effect.

For another example, the detection elements included in the first detection module and the detection elements included in the second detection region may be exchanged in a detection process. The detector as shown in (a) in FIG. 8 is used as an example. A process in which the detector is used to detect a detection region may include two detection processes. In a first detection process, the detection elements in the dark regions are included in the first detection module, and the detection elements in the stripe region and the white region are included in the second detection module; and in a second detection process, the detection elements in the first detection module and the detection elements in the second detection module are exchanged. In other words, the detection elements in the dark regions are included in the second detection module, and the detection elements in the stripe region and the white region are included in the first detection module. Therefore, the first detection module and the second detection module correspond to a same field of view region, and computing complexity in a field of view registration process is reduced.

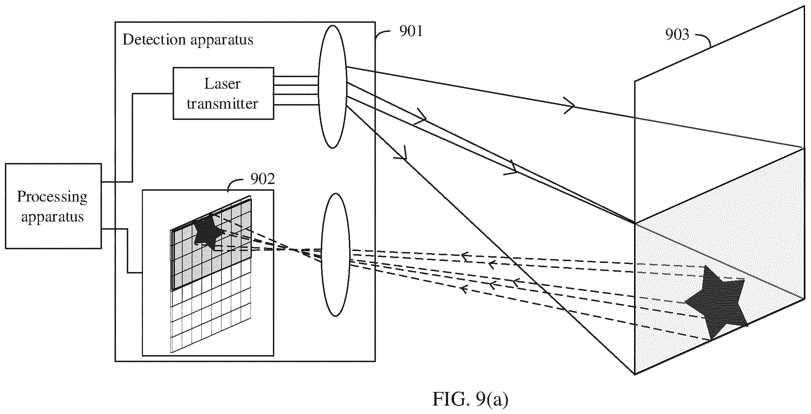

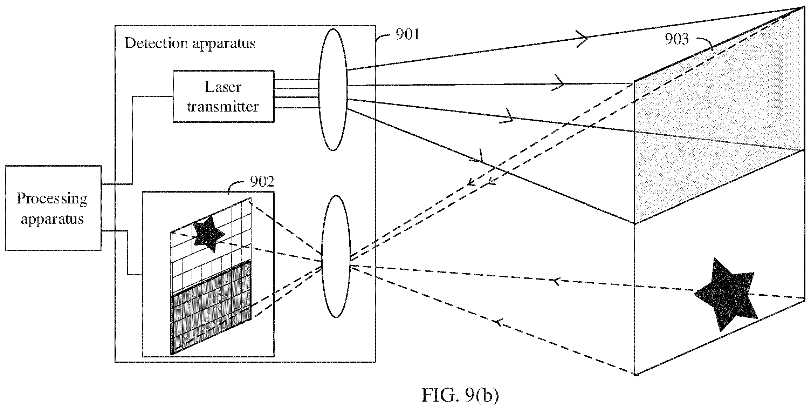

For example, refer to FIG. 9(a) and FIG. 9(b). FIG. 9(a) and FIG. 9(b) are schematic diagrams of another detection process of a detection system according to an embodiment of this application. For a detection apparatus 901, a processing apparatus, and a laser transmitter, refer to the foregoing description. Quantities of rows and columns of a detector and an optical element are merely examples.

As shown in FIG. 9(a), in a first detection process, a first row to a fourth row in a detector 902 are included in a first detection module (a dark region in the detector 902). The first detection module may receive light from a lower part of a detection region 903, and an echo signal obtained by the first detection module is used to obtain point cloud data. A fifth row to an eighth row of the detector 902 are included in a second detection module. The second detection module may receive light from an upper part of the detection region 903, and an echo signal obtained by the first detection module is used to obtain an image. As shown in FIG. 9(b), in a second detection process, a first row to a fourth row in the detector 902 are included in the second detection module. The first detection module may receive light from the lower part of the detection region 903, and an echo signal obtained by the second detection module is used to obtain an image. A fifth row to an eighth row of the detector 902 are included in the first detection module (a dark region in the detector 902). The first detection module may receive light from the upper part of the detection region 903, and an echo signal obtained by the first detection module is used to obtain point cloud data.

It can be learned that, the first detection process and the second detection process can be used to align a field of view region of the echo signal obtained by the first detection module with a field of view region of the echo signal obtained by the second detection module. When a detection result of the detection region is obtained based on the image and the point cloud point, field of view registration complexity can be reduced, and accuracy of the detection result can be improved. It should be understood that a transmit signal may correspond to only a field of view of a first module (as shown in FIG. 9(a) and FIG. 9(b)), or may perform full field of view irradiation. FIG. 9(a) and FIG. 9(b) are merely an example.

In another design of embodiments of this application, the detector in the detection apparatus 101 may receive an optical signal and obtain an echo signal based on the optical signal. The processing apparatus 102 may obtain the echo signal from the detector, and the processing apparatus 102 may obtain point cloud data and an image of a detection region based on the echo signal. The image may be used to supplement information about the detection region, improve angular resolution of the detection apparatus, and improve resolution of a detection result.

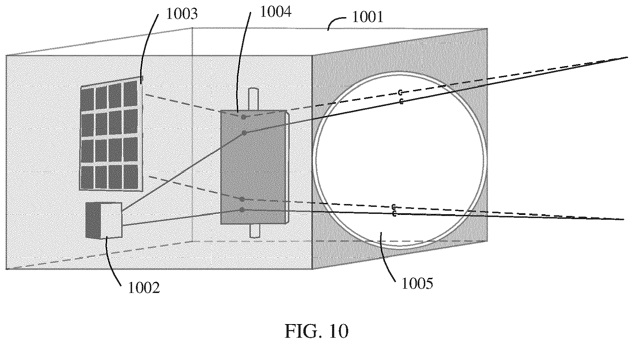

It should be noted that an optical path design and a quantity, a location, a placement sequence, and the like of optical elements in the foregoing detection apparatus (the detection apparatus 501, the detection apparatus 601, the detection apparatus 901, or the like) are provided for ease of description, and are not intended to limit the apparatus in embodiments of this application. In some processes, the detection apparatus may include fewer or more optical elements, or may have another optical design. For example, refer to FIG. 10. FIG. 10 is a schematic diagram of another possible detection apparatus according to an embodiment of this application. The detection apparatus may be applied to the detection system shown in FIG. 1. The detection apparatus 1001 shown in FIG. 10 includes a laser transmitter 1002, a detector 1003, an optical element 1004, and a window 1005. The technical solutions provided in embodiments of this application are also applicable to the detection apparatus shown in FIG. 10.

The following describes in detail methods in embodiments of this application.

### Embodiment 1

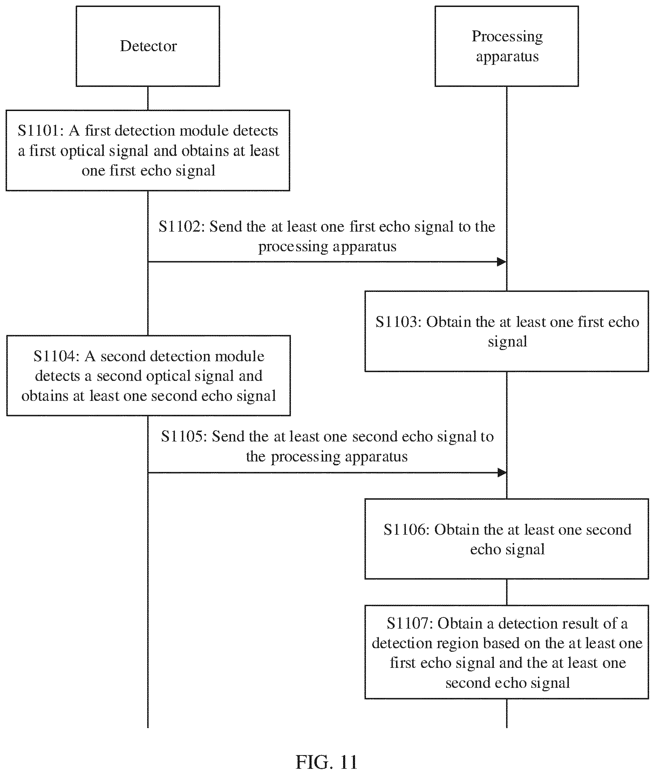

Refer to FIG. 11. FIG. 11 is a schematic flowchart of a signal processing method according to an embodiment of this application. Optionally, the method may be applied to the detection system shown in FIG. 1, FIG. 5, or FIG. 6. The signal processing method shown in FIG. 11 includes step S1101 to step S 1107. It should be understood that, for ease of description, in this application, a sequence of S1101 to S1107 is used for description, and this sequence does not constitute any limitation. An execution sequence, execution time, an execution quantity, and the like of the foregoing one or more steps are not limited. Step S1101 to step S1107 are specifically as follows:

Step S 1101: A first detection module detects a first optical signal and obtains at least one first echo signal.

The first detection module belongs to a detection apparatus. Specifically, the first detection module is included in a detector.

Optionally, the detector includes P×Q detection elements, where P is a quantity of rows of detection elements included in the detector, and Q is a quantity of columns of detection elements included in the detector. Further, optionally, the first detection module includes a plurality of detection elements in the detector. For details, refer to the foregoing descriptions of FIG. 8.

The first detection module may detect an optical signal (referred to as the first optical signal for ease of description), and output an electrical signal based on the optical signal. The first echo signal is the electrical signal, or the first echo signal may be obtained by processing the electrical signal. The first optical signal includes a return signal obtained by detecting a detection region by using a transmit signal. Optionally, the first optical signal may further include a background optical signal from the detection region.

Optionally, there may be one or more first echo signals. A segment of a transmit signal is transmitted to detect the detection region, and the first detection module may correspondingly obtain one first echo signal. In other words, the at least one first echo signal may be obtained by detecting the detection region once, or may be obtained by detecting the detection region a plurality of times.

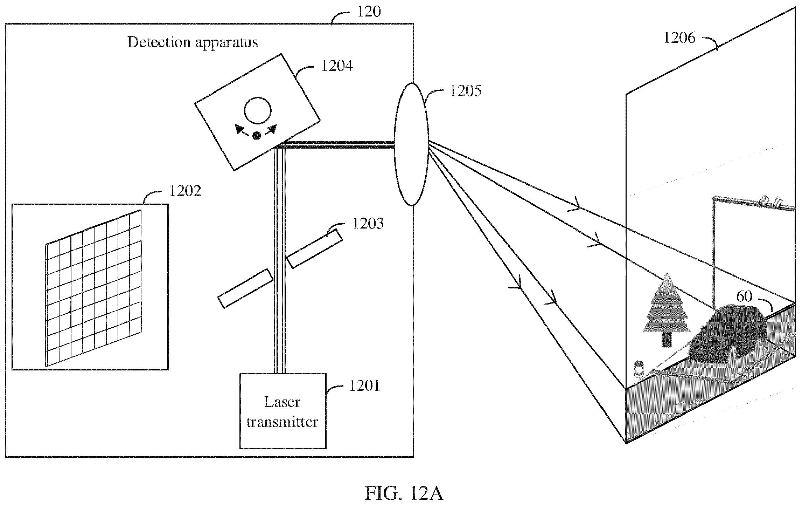

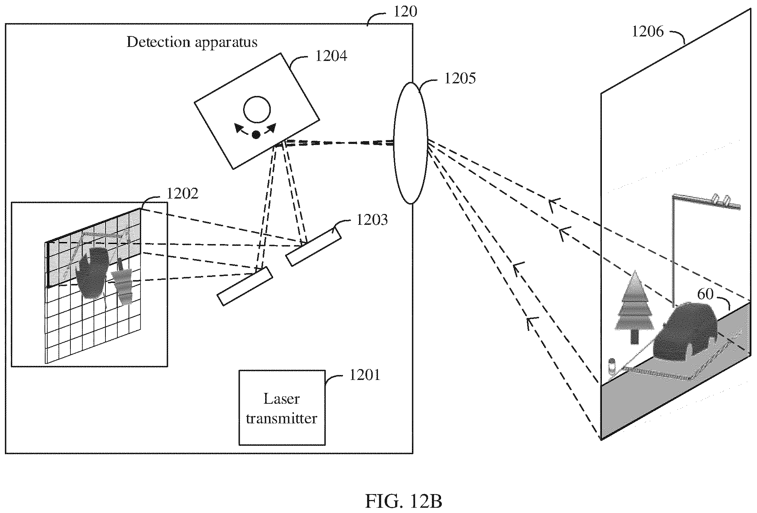

In a possible design, the at least one first echo signal is obtained by the first detection module through detection at at least one scanning angle. For example, refer to FIG. 12A and FIG. 12B. FIG. 12A is a schematic diagram of a possible transmitting process of a detection apparatus according to an embodiment of this application, and FIG. 12B is a schematic diagram of a possible receiving process of a detection apparatus according to an embodiment of this application. As shown in FIG. 12A, a laser transmitter 1201 of a detection apparatus 120 may generate a transmit signal, and the transmit signal irradiates to a sub-region in a detection region 1206 through a scanning mechanism 1204 at an angle. Correspondingly, as shown in FIG. 12B, an optical signal from the detection region may irradiate to a detector 1202 through the scanning mechanism 1204. The detector 1202 includes 64 detection elements in eight rows and eight columns, where detection elements in a first row to a third row are included in the first detection module, as shown in a gray region in the detector. It can be learned that the first detection module may receive the optical signal from the detection region to obtain a first echo signal.

However, a plurality of angles are adjusted through the scanning mechanism 1204, so that the transmit signal may irradiate to a plurality of sub-regions of the detection region 1206. Correspondingly, the first detection module may receive optical signals from the plurality of sub-regions in the detection region 1206, and detect the detection region at a plurality of angles, to obtain a plurality of first echo signals. Optionally, the detection apparatus may further include, for example, one or more of optical elements such as an emission mirror 1203 or an optical window 1205.

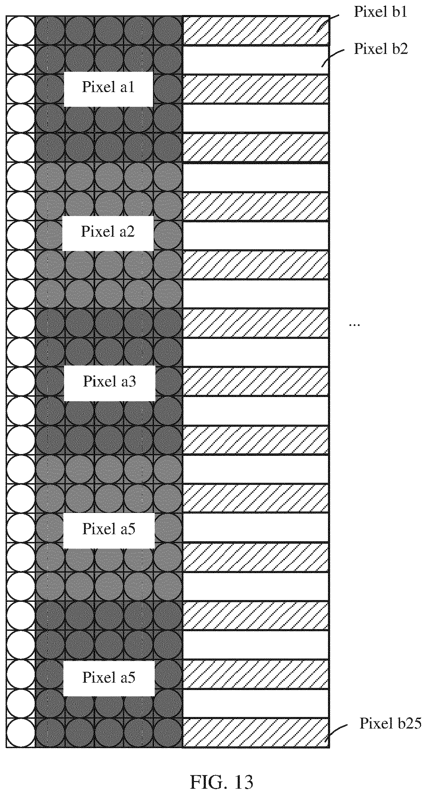

Optionally, the first echo signal may include a signal of one or more pixels (referred to as first pixels below for ease of description). In this embodiment of this application, a pixel may be a point in a point cloud, or may be a pixel in an image. Alternatively, for related descriptions of a pixel, refer to descriptions in the conventional technology. In a design, one first pixel in the first echo signal corresponds to one detection element, or one first pixel corresponds to a plurality of detection elements. For example, refer to FIG. 13. FIG. 13 is a schematic diagram of a detector according to an embodiment of this application. Detection elements in a first column are detection elements in a reserved state, and detection elements in a second column to a sixth column are included in the first detection module. In the first detection module, 5×5 detection elements in the detection elements correspond to one first pixel. As shown in FIG. 13, a first pixel a1 corresponds to 25 detection elements that are in a first row to a fifth row and that are in the second column to the sixth column. Similarly, a first pixel a2 corresponds to 25 detection elements that are in a sixth row to a tenth row and that are in the second column to the sixth column. The rest first pixels are deduced by analogy.

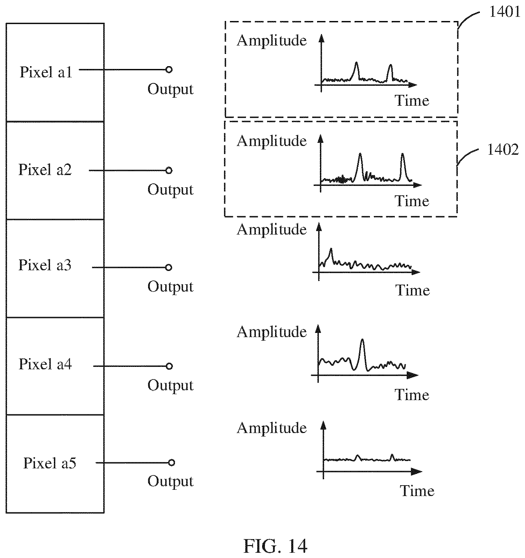

Further, optionally, the first detection module shown in FIG. 13 is used as an example. In this case, one first echo signal may include a signal of five first pixels. For example, refer to FIG. 14. FIG. 14 is a schematic diagram of a possible first echo signal according to an embodiment of this application. An output of a first pixel a1 is shown in a region 1401, an output of a first pixel a2 is shown in a region 1402, and the rest first pixels are deduced by analogy. A waveform diagram shown in the region 1401 or the region 1402 represents a schematic diagram in which an amplitude of an electrical signal changes with time. Generally, a larger quantity of photons received by detection elements in the pixel a1 indicates a larger amplitude of the electrical signal. In some possible scenarios, the waveform diagram shown in the region 1401 may alternatively be replaced with a photon counting statistical histogram.

Step S1102: The detection apparatus sends the at least one first echo signal to a processing apparatus.

Specifically, the processing apparatus has computing and data processing functions. Optionally, the processing apparatus may be deployed in the detection apparatus (where the detection apparatus includes the first detection module), or may be deployed outside the detection apparatus. For example, the processing apparatus may be the processing apparatus 102 shown in FIG. 1, the processing apparatus 502 shown in FIG. 5, the processing apparatus 602 shown in FIG. 6, or the like.

In a possible design, the processing apparatus is connected to the detection apparatus. Alternatively, specifically, the processing apparatus is connected to the detector. The detection apparatus may send the at least one first echo signal to the processing apparatus through a bus, a communication interface, or the like.

In another possible design, the processing apparatus and the detection apparatus may communicate with each other. A communication link may be a wired link, a wireless link, or a combination of a wired link and a wireless link. The detection apparatus may send the at least one first echo signal to the processing apparatus through the communication link.

Optionally, when the at least one first echo signal includes a plurality of first echo signals, the plurality of first echo signals may be sent separately, or may be sent together. For example, the plurality of first echo signals are obtained by detecting the detection region a plurality of times. The detection apparatus may send one first echo signal to the processing apparatus after obtaining the first echo signal through detection, or may send the plurality of first echo signals together after completing detection of the detection region.

Step S 1103: The processing apparatus obtains the at least one first echo signal.

Optionally, the processing apparatus may obtain the at least one first echo signal from the detection apparatus. The detection apparatus sends the at least one first echo signal to the processing apparatus. Correspondingly, the processing apparatus obtains at least one second echo signal from a second detection module.

Further, optionally, the processing apparatus may specifically obtain the at least one first echo signal from the first detection module.

Step S1104: A second detection module detects a second optical signal and obtains at least one second echo signal.

The second detection module belongs to the detection apparatus. Specifically, the second detection module is included in the detector, and the second detection module and the first detection module are included in the same detector. Optionally, the detector includes P×Q detection elements, where P is a quantity of rows of detection elements included in the detector, and Q is a quantity of columns of detection elements included in the detector. The second detection module includes a plurality of detection elements in the detector. For details, refer to the foregoing descriptions of FIG. 8.

The second detection module may detect an optical signal (referred to as the second optical signal for ease of description), and output an electrical signal based on the second optical signal. The second echo signal is the electrical signal, or the second echo signal may be obtained by processing the electrical signal. The second optical signal includes a related optical signal from an ambient light source of the detection region.

Optionally, there may be one or more second echo signals. For details, refer to the descriptions of the first echo signal.

In a possible design, the at least one second echo signal is obtained by the second detection module through detection at at least one scanning angle. For example, as shown in FIG. 12B, an optical signal from the detection region may irradiate to the detector 1202 through the scanning mechanism 1204. The detector 1202 includes 64 detection elements in eight rows and eight columns, and detection elements in the fourth row to the sixth row are included in the second detection module. It can be learned that the second detection module may receive the optical signal from the detection region to obtain a second echo signal.

However, a plurality of angles are adjusted through the scanning mechanism 1204, so that the second detection module may receive optical signals from a plurality of sub-regions in the detection region 1206, to obtain a plurality of second echo signals.

Optionally, the second echo signal may include a signal of one or more pixels (referred to as second pixels below for ease of description). In a design, one second pixel corresponds to one detection element, or one second pixel corresponds to a plurality of detection elements. For example, as shown in FIG. 13, the detection elements in the first column are the detection elements in the reserved state, and detection elements in a seventh column to an eleventh column are included in the second detection module. In a possible design, in the second detection module, 1×5 detection elements in the detection elements correspond to one second pixel. As shown in FIG. 11, a second pixel b1 corresponds to five detection elements that are in the first row and that are in the seventh column to the eleventh column. Similarly, a second pixel b2 corresponds to five detection elements that are in a second row and that are in the seventh column to the eleventh column. The rest second pixels are deduced by analogy.

Further, optionally, when the second detection module shown in FIG. 11 is used as an example, one second echo signal may include a signal of 25 second pixels. A quantity of photons of the second pixel or light intensity information of the second pixel may be obtained by controlling time in which a detection element receives the photons. The detection region may be imaged by computing the quantity of received photons or the light intensity information. For example, if the detection element is controlled to receive photons within one second, a second pixel in which a larger quantity of photons are received within one second is bright, and a second pixel in which a smaller quantity of photons are received within one second is dark. A grayscale image of the detection region may be obtained based on a relationship between brightness and darkness.

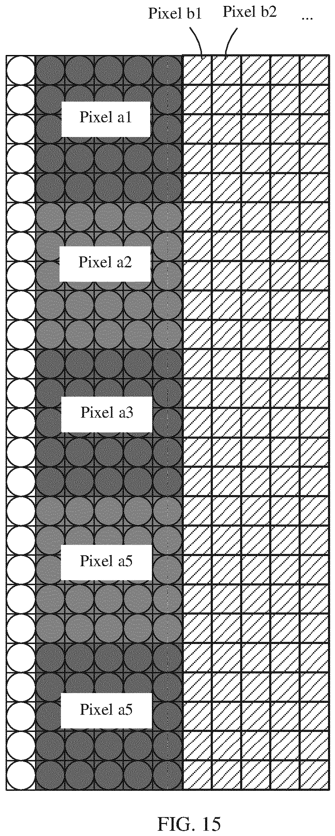

It should be understood that the quantity of detection elements shown in FIG. 13, the detection element included in the first detection module, the detection element included in the second detection module, the detection element included in the first pixel, and the detection element included in the second pixel are merely examples. For example, refer to FIG. 15. FIG. 15 is a schematic diagram of another possible detector according to an embodiment of this application. Detection elements included in a first detection module, a second detection module, and a first pixel are described in the foregoing descriptions of FIG. 13. As shown in FIG. 15, a second echo signal includes 125 second pixels, and one second pixel corresponds to one detection element in the second detection module. For example, a second pixel b1 includes one detection element in a first row and a seventh column, a second pixel b2 includes one detection element in the first row and an eighth column, and the rest pixels are deduced by analogy.

In a possible design, a quantity of detection elements included in a first pixel is greater than a quantity of detection elements included in the second pixel. Specifically, a quantity of detection elements corresponding to the first pixel is M, a quantity of detection elements corresponding to the first pixel is N, and M>N. Here, M and N are integers greater than 0.

A high signal-to-noise ratio and a large fluctuation range can be obtained by using a plurality of detection elements in the first detection module as one first pixel, and a real echo signal can be more obvious when the fluctuation range is large, so that a more accurate ranging effect is obtained. In addition, because a fluctuation range of background light is large, the second pixel may not correspond to excessive detection elements. Because the second pixel includes a smaller quantity of detection elements, pixel density of a second echo signal is higher than pixel density of a first echo signal, so that a clearer image can be obtained.

Optionally, detection elements in a single row (or a single column) correspond to one second pixel. As shown in FIG. 3, a detection result with high vertical resolution (or horizontal resolution) may be obtained. Alternatively, optionally, one detection element corresponds to one second pixel, and a detection result with high vertical resolution and high horizontal resolution may be obtained.

Step S1105: The detection apparatus sends the at least one second echo signal to the processing apparatus.

For related descriptions, refer to the related descriptions in step S 1102.

Optionally, when the at least one second echo signal includes a plurality of second echo signals, the plurality of second echo signals may be sent separately, or may be sent together.

In a design, the first echo signal and the second echo signal may be sent separately, or may be sent together. For ease of description, step S1102 and step S1105 are used herein for description, and this does not mean that the first echo signal and the second echo signal are limited to be definitely sent separately.

Step S1106: The processing apparatus obtains the at least one second echo signal from the second detection module.

The detection apparatus sends the at least one first echo signal to the processing apparatus. Correspondingly, the processing apparatus obtains the at least one second echo signal from the second detection module.

Step S1107: The processing apparatus obtains a detection result of the detection region based on the at least one first echo signal and the at least one second echo signal.

The optical signal for obtaining the first echo signal includes the return signal of the transmit signal. Point cloud data may be obtained based on a time difference between the transmit signal and the return signal (or distance information is obtained, and point cloud data is obtained by processing the distance information).

The second echo signal includes a background optical signal from the detection region, and the detection region may be imaged based on strength of the background optical signal indicated by the second echo signal, to obtain an image of the detection region. Optionally, the image may be a grayscale image.

In a design, the processing apparatus processes the at least one first echo signal to obtain point cloud data corresponding to the detection region. The processing apparatus processes the at least one second echo signal, and images the detection region, to obtain the image corresponding to the detection region.

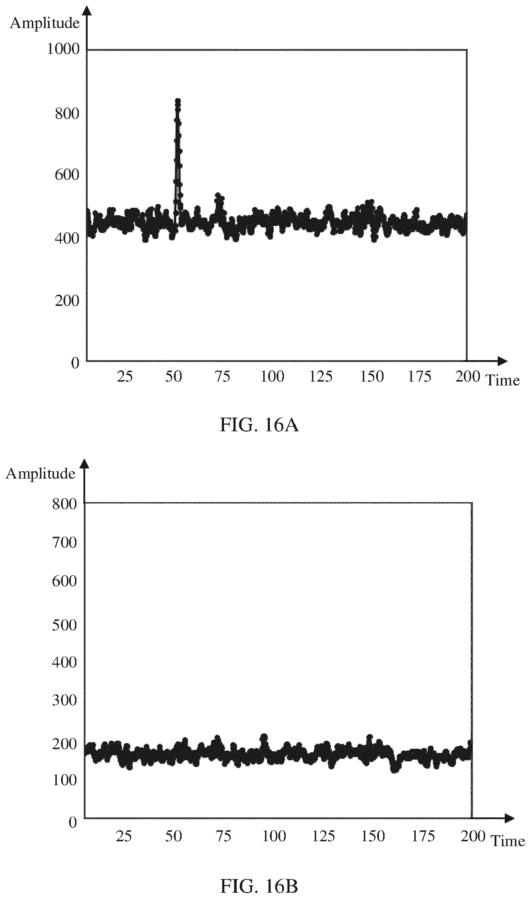

For example, refer to FIG. 16A. FIG. 16A is a schematic diagram of a possible first echo signal according to an embodiment of this application. The processing apparatus may first perform feature signal detection on the first echo signal shown in FIG. 16A. A feature signal is a signal having a special waveform feature, for example, one or more of a pulse signal, a peak signal, a rising edge signal, or the like. The following uses peak detection as an example for description. The processing apparatus detects a peak location in the first echo signal, where the peak location reflects arrival time of a return signal of a transmit signal, and distance information may be computed based on a time difference between the return signal and the transmit signal. A plurality of points are obtained based on distance information of one or more return signals, to form point cloud data.

A process of detecting a detection region may include a plurality of times of detection. In one detection process, some regions in the detection region may be detected. The first echo signal shown in FIG. 16A is a signal obtained through a plurality of times of detection.

For example, refer to FIG. 16B. FIG. 16B is a schematic diagram of a possible second echo signal according to an embodiment of this application. The processing apparatus may process the second echo signal shown in FIG. 16B, to obtain light intensity information (briefly referred to as a light intensity below). For example, processing on the second echo signal may include the following processing: computing the light intensity, summing up photon counts, computing an average value of a total photon count value relative to time, or the like. An image of the detection region is obtained based on one or more light intensities.

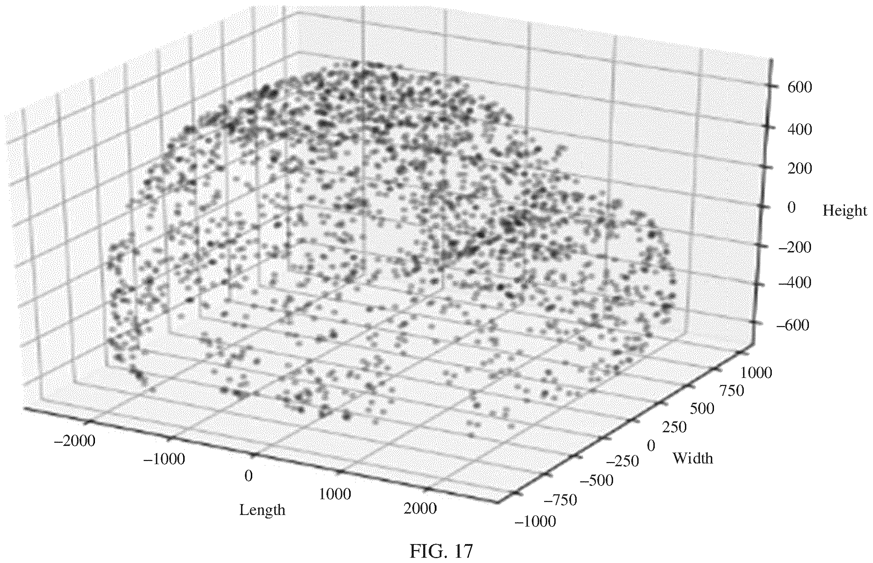

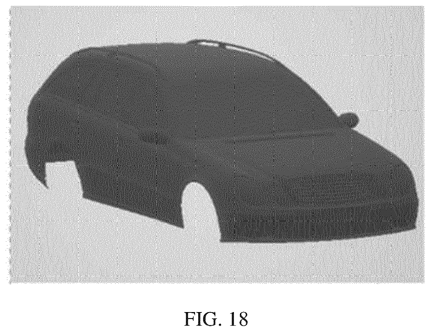

For example, refer to FIG. 17. FIG. 17 is a possible schematic diagram of point cloud data of a detection region according to an embodiment of this application. The point cloud data shown in FIG. 17 includes one or more points. Optionally, each point in the point cloud data may indicate one or more pieces of information such as distance information, coordinate information, or reflection intensity information. Refer to FIG. 18. FIG. 18 is a schematic diagram of a possible image of a detection region according to an embodiment of this application. The image of the detection region represents a feature like a contour, a shape, or a texture of an object in the detection region.

It may be understood that when a processing apparatus obtains a detection result based on at least one first echo signal and at least one second echo signal, the at least one first echo signal may be used to provide point cloud data that is of the detection region and that has high ranging precision, and the at least one second echo signal may be used to provide an image that is of the detection region and that has high resolution. The detection result may include the image and the point cloud data, or the detection result may be obtained with reference to the point cloud data and the image. Because the resolution of the image is high, details (such as a contour, a shape, and a texture) of the object can be better recognized, the point cloud data can provide accurate distance information of the object, and the image has high resolution. This helps improve resolution and accuracy of the detection result and improve detection performance.

In a design, the image and the point cloud data of the detection region are combined, and the detection result obtained through combination may include one or more of enhanced point cloud data, enhanced image data, a fusion detection result, and the like of the detection region. For ease of understanding, the following provides several possible implementations.

In a first implementation, the detection result may include the enhanced point cloud data. Specifically, the processing apparatus performs enhancement on the point cloud data, to obtain the enhanced point cloud data. The enhanced point cloud data has more image features than the original point cloud data (namely, the point cloud data that corresponds to the detection region and that is obtained by processing the at least one first echo signal), or has better accuracy than the original point cloud data. Optionally, enhancement may include one or more of the following processing: supplementing a point cloud, removing noise, recognizing a size of the object, supplementing contour information of the object, or the like. The point cloud data is enhanced based on the image, so that resolution of the detection result can be improved, and angular resolution of a detection apparatus can be improved. The following enumerates four possible designs.

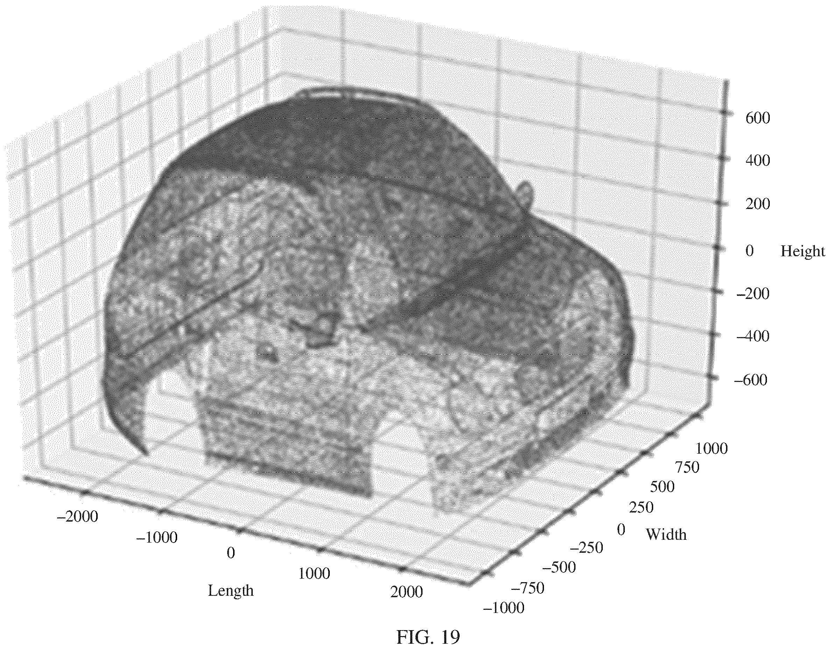

Design 1: A quantity of points in the enhanced point cloud data is greater than a quantity of points in the point cloud data obtained by processing the at least one first echo signal. Refer to FIG. 19. FIG. 19 is a schematic diagram of possible enhanced point cloud data according to an embodiment of this application.

Optionally, a location of a supplemented point may be supplemented on an edge part of a shape, supplemented on a transition part of a different shape, supplemented on a surface of the same object, or the like. Further, optionally, a location of a supplementary point cloud may be determined in a manner like mapping, fitting, real-time computing, or a model obtained through training.

Because there are more points in the enhanced point cloud data, density of the points is higher, so that a contour, a texture, and the like of the object in the enhanced point cloud data are clearer, and the resolution of the detection apparatus is improved.

Design 2: The enhanced point cloud data is point cloud data on which noise filtering is performed, or the enhanced point cloud data may include the point cloud data and information indicating noise in the point cloud data. In some scenarios, a background light (or an interference signal, a noise signal, or the like) intensity is excessively high. As a result, noise information exceeds a detection threshold, and noise is formed on the point cloud data. The detection apparatus may determine the noise in the point cloud data based on the image of the detection region.

Optionally, the noise may be a point that is in a plurality of points in the point cloud data and that does not belong to the contour of the target object. The processing apparatus can recognize, based on the image, the contour of the target object. In other words, the processing apparatus can determine an edge of the object. Further, the processing apparatus may determine the noise in the point cloud data based on the contour of the target object.

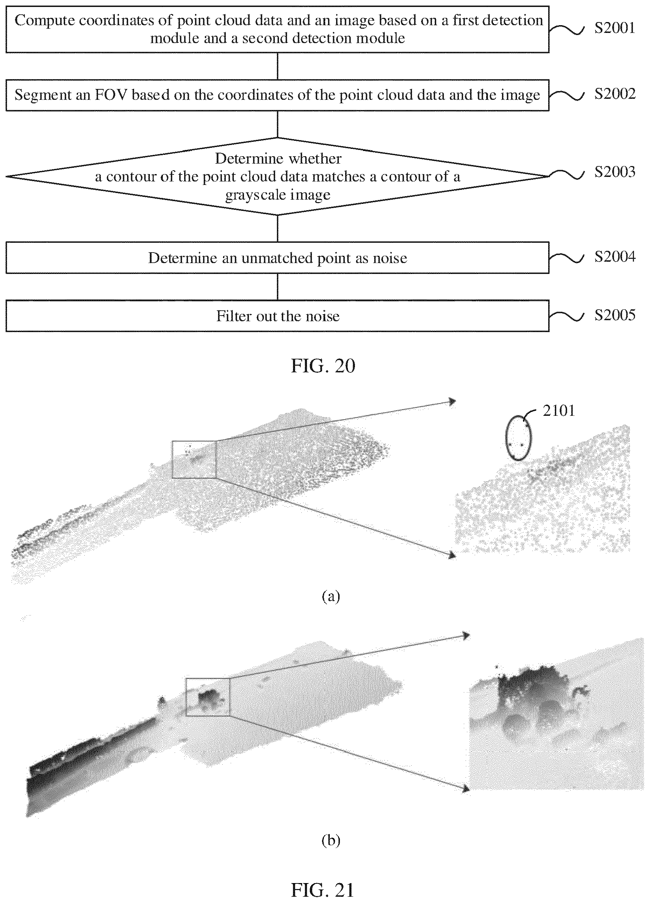

In a possible design, FIG. 20 is a flowchart of a possible noise filtering method according to an embodiment of this application. The method may optionally include the following step S2001 to step S2005.

S2001: Compute coordinates of point cloud data and an image by using a first detection module and a second detection module. The point cloud data may include a plurality of points, and may indicate information such as a distance and a location. In some scenarios, the point cloud data may also be referred to as a depth (depth) image. Specifically, the coordinates of the point cloud data and the image may be computed based on locations of the first detection module and the second detection module. Optionally, the image may be a grayscale image.

S2002: Segment an FOV based on the coordinates of the point cloud data and the image. The segmentation may be coarse segmentation. For example, when the FOV is segmented, an overlapping part between the point cloud data and the image may be determined, or a correspondence between a target point in the point cloud data and a pixel in the image may be determined.

S2003: Determine whether a contour of the point cloud data matches a contour of the grayscale image. For example, the point cloud data and the grayscale image are registered, to determine whether the contour of the point cloud data matches the contour of the grayscale image.

S2004: Determine an unmatched point as noise.

S2005: Filter out the noise.

For example, refer to FIG. 21. FIG. 21 is a possible schematic diagram of determining noise according to an embodiment of this application. The processing apparatus may match the point cloud data with the image, and a point outside the contour of the target object is noise. For example, as shown in (a) in FIG. 21, a point (for example, shown in a region 2101) that is not in the contour of the object is a mismatched point, and may be determined as noise.

Optionally, the processing apparatus may filter out noise in the point cloud data, to obtain the enhanced point cloud data. After the noise is determined, effective noise filtering may be performed, to improve accuracy of the point cloud data and improve detection performance of a lidar, (b) in FIG. 21 shows the enhanced point cloud data that is obtained through noise filtering and that has higher resolution and accuracy. It should be noted that an effect of removing noise may be affected by a processing capability and accuracy of the detection result. Therefore, the noise may not be completely removed.

Optionally, the processing apparatus may not filter out noise, but includes, in the output enhanced point cloud data, information indicating the noise in the point cloud data, for example, a noise location, a noise number, noise identification (identification, ID), or a noise flag (flag). An apparatus for receiving the enhanced point cloud data may further process the noise based on the information indicating the noise in the point cloud data.

Design 3: The detection result of the detection region may include the size of the target object in the detection region. Specifically, the processing apparatus may determine the size of the target object in the detection region based on the image of the detection region and the point cloud data of the detection region. The resolution of the detection apparatus is improved by combining the image and the point cloud data, and therefore the detection apparatus has a capability of accurately measuring the size of the object. The size of the target object may include one or more of a length, a width, a height, and the like of the target object.

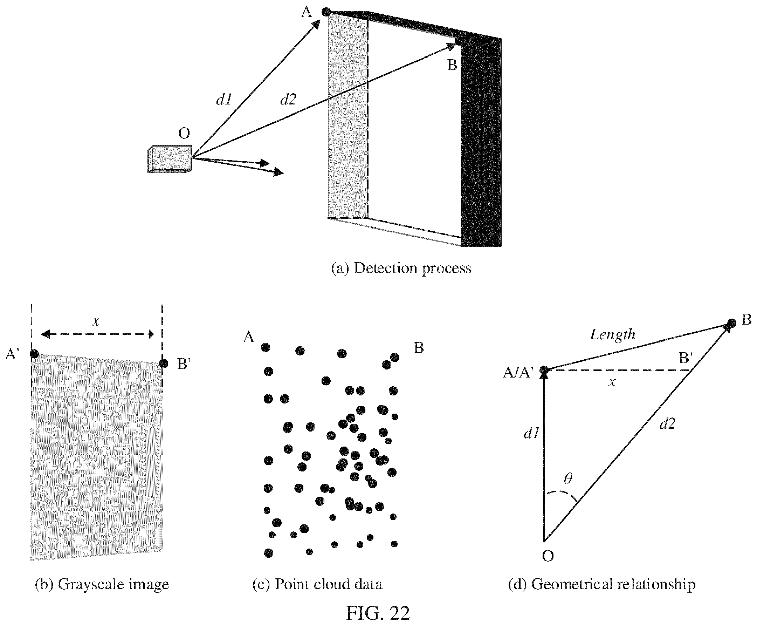

Optionally, the processing apparatus may determine the edge of the target object based on the image, and then obtain the size of the target object based on the point cloud data. For example, refer to FIG. 22. FIG. 22 is a possible schematic diagram of determining a size of an object according to an embodiment of this application. (a) in FIG. 22 shows a process of detecting the object, and a width L of the object is a distance between a point A and a point B. (b) in FIG. 22 shows an image of a detection region, and the image includes contour information. A distance x between the point A and the point B on the image may be obtained through computing based on a contour. (c) in FIG. 22 shows point cloud data of the detection region. A distance d1 between the point A and a detection apparatus and a distance d2 between the point B and the detection apparatus may be obtained based on the point cloud data. As shown in (d) in FIG. 22, an actual distance between the point A and the point B may be obtained based on an angle *θ* formed by a line between the point A and the detection apparatus and a line between the point B and the detection apparatus, the distance d1, and the distance d2. It should be understood that the process shown in FIG. 21 is merely an example, and specific size computing is subject to an actual computing process. For example, a specific implementation process may include more other computing processes or fewer computing processes, or the size of the object may be determined according to a method like table lookup, fitting, mapping, a preconfigured algorithm, or model training.

Alternatively, optionally, the processing apparatus may obtain the enhanced point cloud data based on the image of the detection region and the point cloud data of the detection region. The detection apparatus may determine information about a distance between the edge of the target object and a point cloud based on the enhanced point cloud data, to obtain the size of the target object in the detection region.

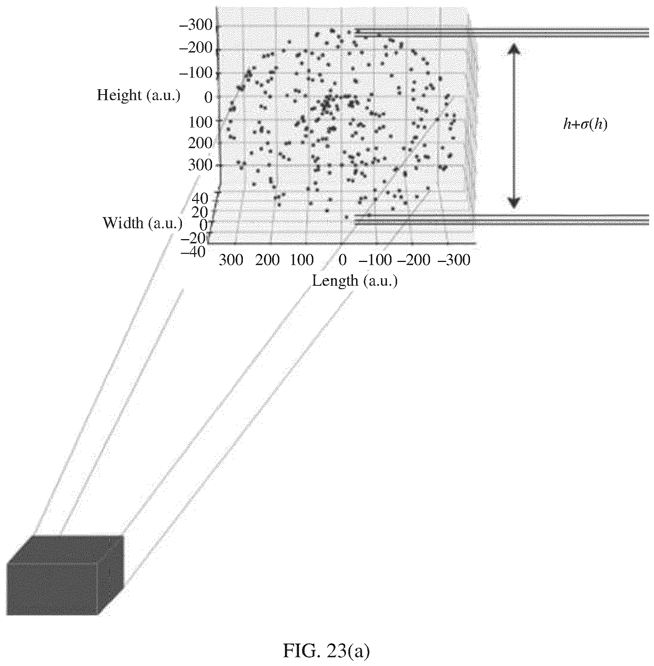

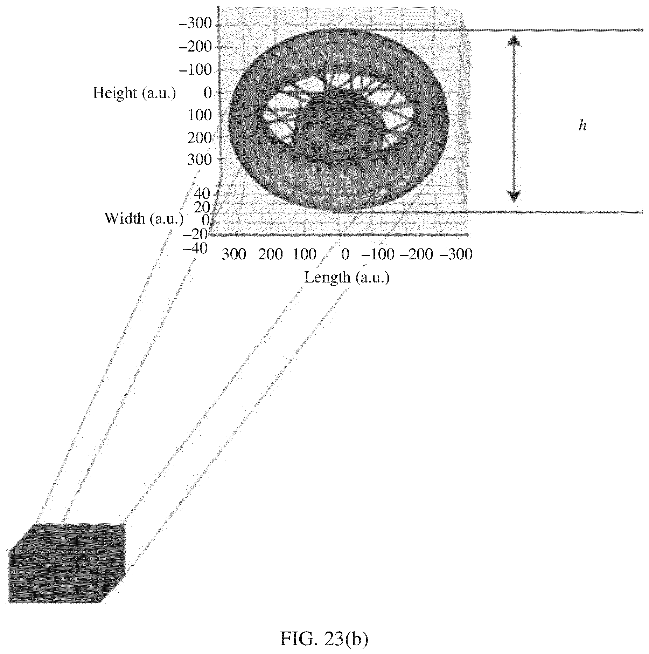

Specifically, the enhanced point cloud data can make the contour, the texture, and the like of the object in the detection result clearer, and has a better recognition effect than the point cloud data. For example, refer to FIG. 23(a) and FIG. 23(b). FIG. 23(a) and FIG. 23(b) are schematic diagrams of possible point cloud data and enhanced point cloud data according to an embodiment of this application. FIG. 23(a) shows the possible point cloud data. Because the point cloud data has low resolution and points are discrete, an error may occur in a height of an object obtained through computing. For example, an original height of the object is h, and a height obtained through computing based on the point cloud data has an error of σ(h) (only an example). FIG. 23(b) shows the possible enhanced point cloud data. A contour of a tire may be clearly recognized based on the enhanced point cloud data, and a height h of the tire may be computed with reference to distance information of a lidar point cloud.

A size of an object is recognized, so that a capability of recognizing the object by an apparatus can be improved, and an intelligence degree of the apparatus can be improved, so as to improve user experience. For example, in the field of autonomous driving (or assisted driving), a vehicle-mounted apparatus recognizes a size of an object, so that decisions such as route planning, obstacle avoidance, and braking can be more accurate, so as to improve driving safety.

In a possible implementation, on a basis that the point cloud data can match the image, the processing apparatus combines the point cloud data and the image, to obtain high-resolution point cloud data. Based on the high-resolution point cloud data, a size of an object in a region of interest (region of interest, ROI) is recognized, for example, a height of the object is recognized, so as to improve resolution of a detection result and improve practicability of the detection result.

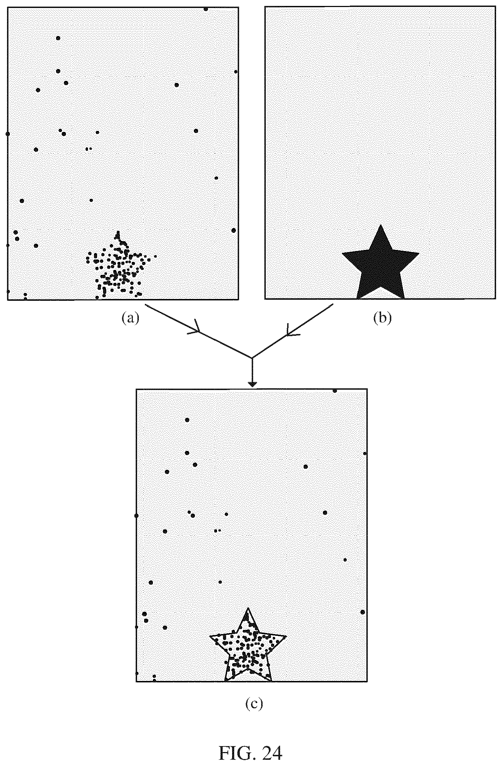

Design 4: Based on the image of the detection region, the contour of the object and/or the texture of the object in the detection region are supplemented to the point cloud data, so that the object represented by the enhanced point cloud data is clearer, and a difference and a gap between objects are more obvious, so as to improve the accuracy of the detection result. For example, refer to FIG. 24. FIG. 24 is a schematic diagram of possible enhanced point cloud data according to an embodiment of this application. (a) in FIG. 24 shows the point cloud data of the detection region, and (b) in FIG. 24 shows the image corresponding to the detection region. Information such as the contour or the texture of the object in the detection region may be extracted from the image of the detection region, and the information such as the contour or the texture of the object in the detection region is fused into the point cloud data of the detection region, to obtain the enhanced point cloud data including the information such as the contour or the texture, as shown in (c) in FIG. 24.

It should be noted that the foregoing designs 1 to 4 may be combined when the designs are not mutually exclusive. For example, the enhanced point cloud data is obtained by using the enhancement operation shown in the design 1, and the enhanced point cloud data may be used in the size recognition process shown in the design 3. A combination of the designs is not described in detail in this application.

In a second implementation, the detection result may include an enhanced image of the detection region. Specifically, the processing apparatus performs enhancement on the image based on the point cloud data, to obtain the enhanced image. Because the point cloud data is three-dimensional data including distance information, and is slightly affected by an angle of ambient light, an exposure length, or the like, enhancement is performed on the image based on the point cloud data, to improve accuracy of the image and improve detection performance of the detection apparatus. One or more of the following enhancement may be performed on the image based on the point cloud data: matching interpolation, shadow removal, noise reduction, contrast enhancement, overexposure removal, underexposure compensation, or the like.

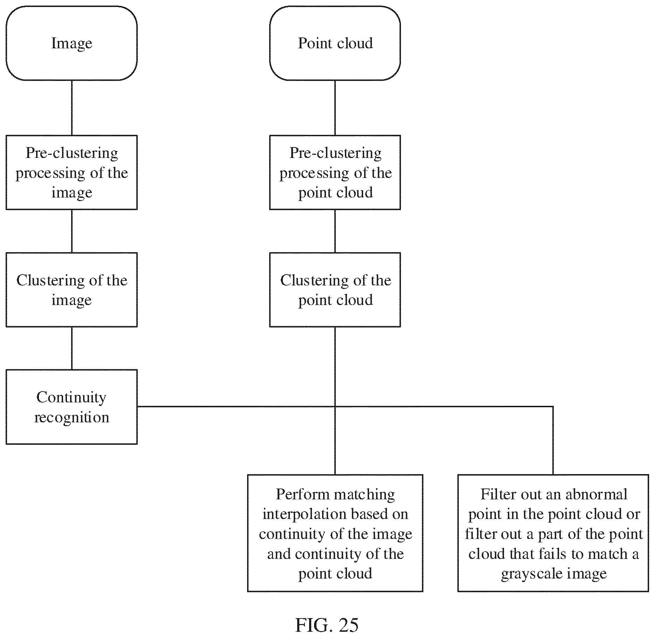

The following uses matching interpolation as an example to describe a possible frame/block-level enhancement method. Refer to FIG. 25. FIG. 25 is a possible schematic flowchart of obtaining a detection result according to an embodiment of this application. The processing apparatus may perform an operation of pre-clustering processing, clustering, or continuous recognition on the image. An operation like pre-clustering processing or point cloud clustering may be performed on a point cloud. Pre-clustering processing of the point cloud includes but is not limited to motion compensation, ground segmentation, noise reduction, or the like. Point cloud clustering may be implemented according to one or more of the following methods: a partition-based clustering method (Partition-based clustering Method), a density-based clustering method (Density-based clustering method), a hierarchical clustering method (Hierarchical clustering Method), or the like. The partition-based method includes but is not limited to k-means and a variant thereof: k-means++, bi-kmeans, kernel k-means, or the like. The density-based method includes but is not limited to density-based spatial clustering of applications with noise (Density-Based Spatial Clustering of Applications with Noise, DBSCAN) or a variant thereof.

Matching interpolation may be performed based on continuity of the image and continuity of the point cloud. A process of obtaining an estimated pixel value based on a known pixel value (or a numerical value) is referred to as interpolation. An estimated pixel may be obtained through computing based on continuity of the point cloud and continuity of the image, the resolution of the detection result is improved, and information included in the image and/or the point cloud data is supplemented.

In another design, as shown in FIG. 25, in the method provided in this application, an abnormal point in the point cloud data may be further filtered out, or a part of the point cloud data that fails to match the image may be filtered out, to improve the accuracy of the detection result.

The shadow removal is used as an example. The point cloud data is data in a 3-dimensional form, and processing may be performed on a shadow region like a recess or a region without background light, for example, a shadow removal operation like increasing luminance of the shadow region or setting the shadow region to preset luminance (or a preset color), to improve an image effect.

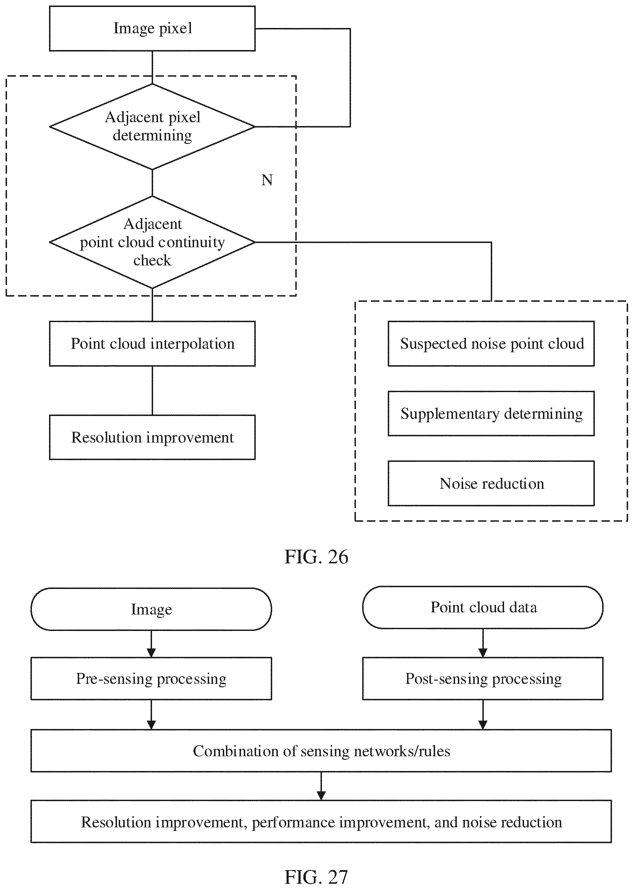

The following describes a possible pixel/line-level enhancement method. Refer to FIG. 26. FIG. 26 is another possible schematic flowchart of obtaining a detection result according to an embodiment of this application. The processing apparatus may perform adjacent pixel continuity determining on the image, and perform adjacent point cloud continuity check (with reference to the point cloud data), to improve the resolution of the detection result. For example, point cloud interpolation may be performed on a point cloud. Specifically, a new point may be obtained through estimation based on the image and the existing point cloud, and is used to supplement the point cloud data to improve resolution of the point cloud data. For another example, the processing apparatus may further perform operations such as suspected noise determining, supplementary determining, and noise reduction, to improve resolution of the point cloud data, the image, or a fusion result. Supplementary determining may be supplementary determining based on an intensity, an accumulated intensity, spatial coordinates, a plurality of echoes, or the like. Adjacent pixel continuity determining may be determining based on an intensity, an accumulated intensity, background grayscale, spatial coordinates, a plurality of echoes, or the like. It should be understood that each step may be performed once or a plurality of times. For example, the two operations of adjacent pixel determining and the adjacent point cloud continuity check may be performed N times, where N is a positive integer. Similarly, an execution operation, an execution time, and an execution sequence of the remaining operations are not limited in this application.

In a third implementation, the detection result may include a fusion detection result. Specifically, the processing apparatus combines the image of the detection region and the point cloud data of the detection region, to obtain the fusion detection result. The fusion detection result has a more reliable reflectivity, a more reliable reflection intensity and more reliable image information. The image information may include one or more of grayscale image information, color information, shadow information, and the like.

For example, refer to FIG. 27. FIG. 27 is a flowchart of another method for obtaining a detection result according to an embodiment of this application. During image processing, sensing networks and/or sensing rules may be combined to obtain the detection result, so as to improve resolution of the detection result and improve detection performance. For example, noise is removed to improve effectiveness and accuracy. Optionally, before the sensing networks are combined, the point cloud data may be processed (for example, pre-sensing processing). Pre-sensing processing may include one or more of the following operations: motion compensation, ground segmentation, noise reduction, matching, coarse classification, data removal or supplement, and the like. Similarly, the processing apparatus may perform processing (for example, pre-sensing processing) on the image.

For example, mapping may be performed on the point cloud data based on distribution of points in a point cloud and a shape of an object in the image, to obtain a 3D image in which the image and the point cloud are fused. Because the image has better resolution than the point cloud data, and the enhanced point cloud data obtained by fusing the image and the point cloud data has higher resolution than the point cloud data, resolution of the detection result is improved.

Optionally, when there are a plurality of types of detection results, the processing apparatus may determine, based on indication information or in a preset manner, one or more types of detection results to be generated or output. For example, the processing apparatus receives indication information sent by another device, where the indication information indicates that the enhanced point cloud data is requested, and the processing apparatus provides the enhanced point cloud data for the device in response to the indication information.

In some scenarios, a field of view region corresponding to the first detection module and a field of view region corresponding to the second detection module may be different to some extent, so that a field of view region corresponding to the point cloud data may not be completely the same as a field of view region corresponding to the image. In a possible design, the processing apparatus may obtain a detection result of an overlapping region based on the point cloud data corresponding to the detection region and the image corresponding to the detection region, where the overlapping region is an overlapping region between the point cloud data and the image. A detection result of the overlapping region includes enhanced point cloud data of the overlapping region, an enhanced image of the overlapping region, a fused image of the overlapping region, or the like. The detection result of the detection region includes the detection result of the overlapping region. Because the overlapping region is a region in which the point cloud data matches the image, accuracy of the enhanced point cloud data in the overlapping region is high, so as to improve reliability of the detection result.

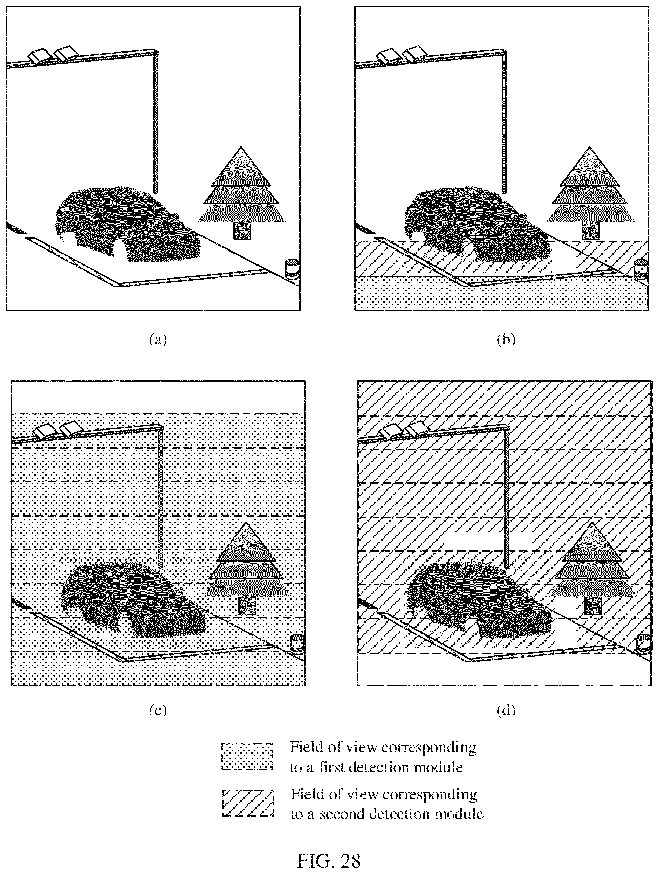

For example, an example in which the detection result includes the enhanced point cloud data and the detection apparatus is a scanning detection apparatus is used. Refer to FIG. 28. FIG. 28 is a schematic diagram of a detection region according to an embodiment of this application. The detection region of the detection apparatus is shown in (a) in FIG. 28. The detection apparatus detects the detection region at a scanning angle, and a region corresponding to an optical signal received by the detection apparatus is shown in (b) in FIG. 28. A dot-shaped region is a field of view region of a first detection module, and an oblique stripe-shaped region is a field of view region of a second detection apparatus. The detection apparatus detects the detection region at a plurality of angles. A field of view region formed by the first detection module through detection at the plurality of angles is shown in (c) in FIG. 28, and a field of view region formed by the second detection module through detection at a plurality of angles is shown in (d) in FIG. 28. Correspondingly, point cloud data of the detection region obtained by the processing apparatus is specifically point cloud data corresponding to a dot-shaped region in (c) in FIG. 28, and an image of the detection region obtained by the processing apparatus is specifically an image corresponding to an oblique stripe-shaped region in (d) in FIG. 28. The processing apparatus obtains a detection result based on the point cloud data and the image, and the detection result may include enhanced point cloud data in an overlapping region.

In the embodiment shown in FIG. 11, the echo signal provided by the first detection region of the detector may be used to obtain the point cloud data corresponding to the detection region, and the echo signal provided by the second detection module of the detector may be used to obtain the image corresponding to the detection region. The detection result may include the image of the detection region and the point cloud data of the detection region. Alternatively, the detection result may be obtained with reference to the point cloud data and the image of the detection region. For example, the point cloud data is enhanced based on the image of the detection region to obtain enhanced point cloud data. For another example, the image is enhanced based on the point cloud data, to obtain enhanced image data. For another example, a fusion detection result of the detection region is obtained by fusion of the image and a point cloud.

In this embodiment of this application, a detection result is obtained by using signals of different modules in a detector, and an image may be obtained without a visual sensor like a camera being added, so that costs of a detection apparatus do not significantly increase. The point cloud data has high ranging precision, and the image has high resolution. In this way, resolution and accuracy of the detection result are improved, and detection performance is improved.

Because the first detection module and the second detection module belong to a same detector, location deviations of the first detection module and the second detection module on a detector plane may be determined to a micrometer level, to avoid complex computing in a registration process of different sensors in a field of view region, and reduce computing resources. Further, the two detection modules may further share a same optical system, so as to reduce costs of optical elements, avoid a problem of a field of view region mismatch caused by an installation tolerance, vibration, or the like, reduce computing resources, and improve detection performance of the detection apparatus.

In addition, when the detection result is obtained with reference to the point cloud data and the image, the detection result obtained with reference to the point cloud data and the image has both high ranging precision and high resolution. In this way, the resolution and accuracy of the detection result are improved. Because the resolution of the detection result is high, a capability of distinguishing an object is enhanced. In this way, angular resolution of the detection apparatus is effectively improved, and detection performance is improved.

### Embodiment 2

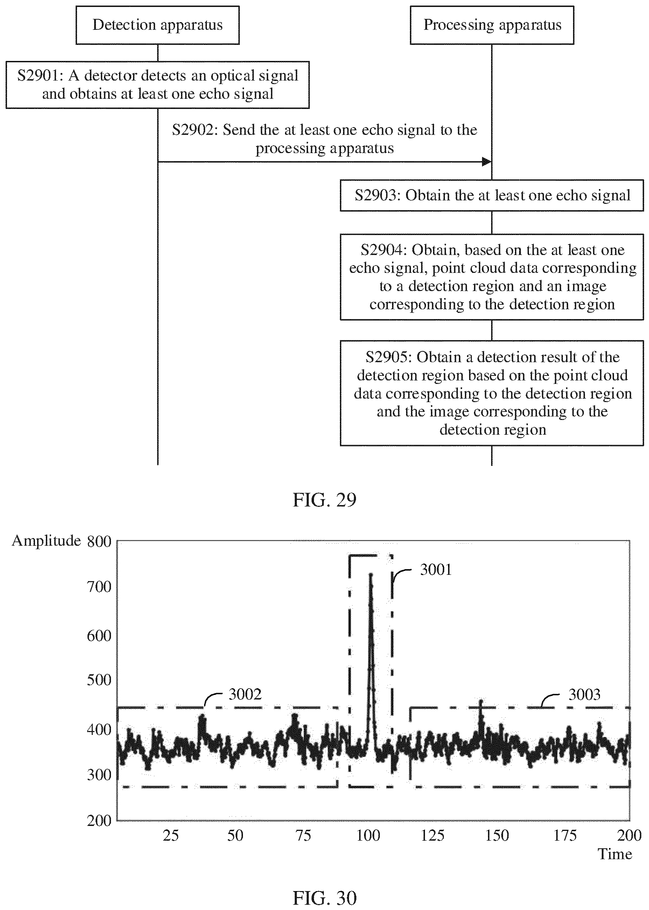

Refer to FIG. 29. FIG. 29 is a schematic flowchart of a signal processing method according to an embodiment of this application. Optionally, the method may be applied to the detection system shown in FIG. 1, FIG. 5, or FIG. 6. The signal processing method shown in FIG. 28 includes step S2901 to step S2905. It should be understood that, for ease of description, in this application, a sequence of S2901 to S2905 is used for description, but this does not mean that the method is limited to be definitely performed in the foregoing sequence. An execution sequence, execution time, an execution quantity, and the like of the foregoing one or more steps are not limited. Step S2901 to step S2905 are specifically as follows:

Step S2901: A detector detects an optical signal to obtain at least one echo signal, where the optical signal includes a return signal obtained by detecting a detection region by using a transmit signal.

Specifically, the detector is included in a detection apparatus. The detector may receive the optical signal and output an electrical signal based on the optical signal. The echo signal is the electrical signal, or the echo signal may be obtained by processing the electrical signal. The optical signal received by the detector includes the return signal obtained by detecting the detection region by using the transmit signal, and further includes a background optical signal from the detection region.

Optionally, the detector may include a plurality of detection elements. Further, optionally, the plurality of detection elements of the detector are arranged in a form of a P×Q array, where P is a quantity of rows of detection elements included in the detector, and Q is a quantity of columns of detection elements included in the detector.

Optionally, there may be one or more echo signals. A segment of a transmit signal is transmitted to detect the detection region, and the detector may correspondingly obtain one echo signal. In other words, the at least one echo signal may be obtained by detecting the detection region once, or may be obtained by detecting the detection region a plurality of times.

In a possible design, the at least one echo signal is obtained by the detector through detection at at least one scanning angle. For details, refer to the description in step S 1102.

Step S2902: The detection apparatus sends the at least one echo signal to a processing apparatus.

Specifically, the processing apparatus has a computing and data processing function. Optionally, the processing apparatus may be deployed in the detection apparatus (where the detection apparatus includes a first detection module), or may be deployed outside the detection apparatus. For example, the processing apparatus may be the processing apparatus 102 shown in FIG. 1, the processing apparatus 502 shown in FIG. 5, the processing apparatus 602 shown in FIG. 6, or the like.

In a possible design, the processing apparatus is connected to the detection apparatus. Alternatively, specifically, the processing apparatus is connected to the detector. The detection apparatus may send the at least one echo signal to the processing apparatus through a bus, a communication interface, or the like.

In another possible design, the processing apparatus and the detection apparatus may communicate with each other. A communication link may be a wired link, a wireless link, or a combination of a wired link and a wireless link. The detection apparatus may send the at least one echo signal to the processing apparatus through the communication link.

Optionally, when the at least one echo signal includes a plurality of echo signals, the plurality of echo signals may be sent separately, or may be sent together. For example, the plurality of echo signals are obtained by detecting the detection region a plurality of times. The detection apparatus may send one echo signal to the processing apparatus after obtaining the echo signal through detection, or may send the plurality of echo signals together after completing detection of the detection region.

Optionally, the at least one echo signal includes a feature signal and a background signal. The feature signal usually has a special waveform feature, and may be a signal corresponding to the return signal. For related descriptions, refer to the foregoing descriptions in the term part.

The background signal includes a signal obtained based on background light from the detection region. Optionally, the background signal further includes an interference signal (for example, a signal corresponding to an optical signal reflected by an optical element of the detection apparatus), current noise, or the like.

In a possible example, the background signal is a signal other than the feature signal in the at least one echo signal.

For example, the background signal may be obtained by filtering out the feature signal in the echo signal. For example, refer to FIG. 30. FIG. 30 is a schematic diagram of a possible echo signal according to an embodiment of this application. A feature signal is in a region 3001, and background signals are in a region 3002 and a region 3003. It should be understood that a pulse signal in the region 3001 herein is merely an example, and a detection rule of the feature signal in the echo signal depends on a specific implementation.

Step S2903: The processing apparatus obtains the at least one echo signal.

It may be understood that the detection apparatus sends the at least one echo signal to the processing apparatus. Correspondingly, the processing apparatus obtains the at least one echo signal from the detection apparatus.

Further, optionally, the processing apparatus may specifically obtain at least one first echo signal from the detector.

Step S2904: The processing apparatus obtains, based on the at least one echo signal, point cloud data corresponding to the detection region and an image corresponding to the detection region.

In a design, the processing apparatus obtains, based on the feature signal in the at least one echo signal, the point cloud data corresponding to the detection region.

The processing apparatus images the detection region based on the background signal in the at least one echo signal, to obtain the image corresponding to the detection region.

Specifically, the processing apparatus may first perform feature signal detection on the echo signal shown in FIG. 29. The feature signal is a signal having a special waveform feature, for example, one or more of a pulse signal, a peak signal, a rising edge signal, or the like. The following uses peak detection as an example for description. The processing apparatus detects a peak location in a first echo signal, where the peak location reflects arrival time of a return signal of a transmit signal, and distance information may be computed based on a time difference between the return signal and the transmit signal. A plurality of points are obtained based on distance information of one or more return signals, to form point cloud data.

After the distance information is obtained, data near the peak location is filtered out to obtain the background signal. The processing apparatus processes the background signal to obtain light intensity information (briefly referred to as a light intensity below). For example, processing on a second echo signal may include the following processing: computing a light intensity, summing up photon counts, computing an average value of a total photon count value relative to time, or the like. The image of the detection region is obtained based on one or more light intensities.

For example, refer to FIG. 16B. FIG. 16B is a schematic diagram of a possible second echo signal according to an embodiment of this application. The processing apparatus may process the second echo signal shown in FIG. 16B, to obtain light intensity information (briefly referred to as a light intensity below). For example, processing on the second echo signal may include the following processing: computing a light intensity, summing up photon counts, computing an average value of a total photon count value relative to time, or the like. The image of the detection region is obtained based on one or more light intensities.

Step S2905: The processing apparatus obtains a detection result of the detection region based on the point cloud data corresponding to the detection region and the image corresponding to the detection region.

The detection result may include the image and the point cloud data, or the detection result may be obtained with reference to a point cloud and the image. Because resolution of the image is high, details (such as a contour, a shape, and a texture) of an object can be better recognized, the point cloud data can provide accurate distance information of the object, and the image has high resolution. This helps improve resolution and accuracy of the detection result and improve detection performance.

For example, the point cloud data shown in FIG. 17 includes one or more points. Optionally, a point in the point cloud data may indicate one or more pieces of information such as distance information, coordinate information, or reflection intensity information. The image of the detection region shown in FIG. 18 represents a feature like a contour, a shape, or a texture of the object in the detection region.

In a design, the image and the point cloud data of the detection region are combined, and the detection result obtained through combination may include one or more of enhanced point cloud data, enhanced image data, a fusion detection result, and the like of the detection region. For related descriptions, refer to a plurality of possible implementations and detailed descriptions of corresponding designs in step S1107.

Optionally, when there are a plurality of types of detection results, the processing apparatus may determine, based on indication information or in a preset manner, one or more types of detection results to be generated or output. For example, the processing apparatus receives indication information sent by another device, where the indication information indicates that the enhanced point cloud data is requested, and the processing apparatus provides the enhanced point cloud data for the device in response to the indication information.

In the embodiment shown in FIG. 29, the point cloud data corresponding to the detection region and the image corresponding to the detection region are obtained based on the at least one echo signal, and the detection result of the detection region is obtained based on the point cloud data and the image. The detection result may include the image of the detection region and the point cloud data of the detection region. Alternatively, the detection result may be obtained with reference to the point cloud data and the image of the detection region. For example, the point cloud data is enhanced based on the image of the detection region to obtain enhanced point cloud data. For another example, the image is enhanced based on the point cloud data, to obtain enhanced image data. For another example, a fusion detection result of the detection region is obtained by fusion of the image and a point cloud.

In this embodiment of this application, a detection result is obtained by using a detector, and an image is obtained without a visual sensor like a camera being added, so that costs of a detection apparatus do not significantly increase. A signal used to obtain point cloud data and a signal used to obtain an image are from a same detector. Therefore, the point cloud data and the image can be completely aligned, so that a detection result has high ranging precision and high resolution, and complex computing in a registration process of different sensors in a field of view region is avoided. In this way, computing resources are reduced.

In addition, when the detection result is obtained with reference to the point cloud data and the image, the detection result obtained with reference to the point cloud data and the image has both the high ranging precision and the high resolution. In this way, the resolution and accuracy of the detection result are improved. Because the resolution of the detection result is high, a capability of distinguishing an object is enhanced. In this way, angular resolution of the detection apparatus is effectively improved, and detection performance is improved.

### Embodiment 3

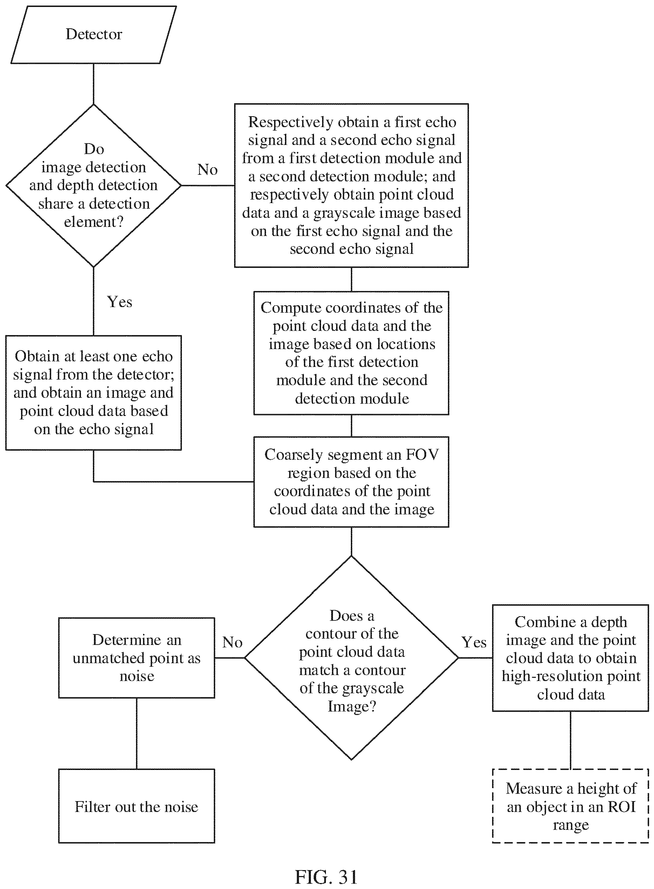

In this embodiment of this application, a processing apparatus may be disposed for different detectors, and may use different processing procedures to obtain a detection result. FIG. 31 is a schematic flowchart of a possible signal processing method according to an embodiment of this application;

When image detection (used to obtain an image, for example, obtain a grayscale image) and depth detection (used to obtain point cloud data, or depth information, or distance information) share a detection element, a detection result may be obtained in a manner in Embodiment 2. For related descriptions, refer to the foregoing descriptions.

In a case in which the image detection and the depth detection do not share a detection element, a detection result may be obtained in a manner in Embodiment 1. For related descriptions, refer to the foregoing descriptions. Details are not described herein again.

The foregoing describes in detail the method in this embodiment of this application. The following provides an apparatus in embodiments of this application. It may be understood that, a plurality of apparatuses provided in embodiments of this application, for example, a detection apparatus or a processing apparatus, include a corresponding hardware structure, a corresponding software module, or a combination of a hardware structure and a software structure for performing various functions, to implement functions in the foregoing method embodiments. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may implement the foregoing method embodiments by using different apparatus implementations in different use scenarios. It should not be considered that different implementations of the apparatus go beyond the scope of embodiments of this application.

In embodiments of this application, an apparatus (for example, a detection apparatus or a processing apparatus) may be divided into function modules. For example, each function module may be obtained through division based on a corresponding function, or two or more functions may be integrated into one function module. The integrated module may be implemented in a form of hardware, or may be implemented in a form of a software function module. It should be noted that, in embodiments of this application, division into modules is an example, and is merely a logical function division. In an actual implementation, another division manner may be used.

For example, when the function modules of the apparatus are divided in an integrated manner, several possible processing apparatuses are enumerated in this application.

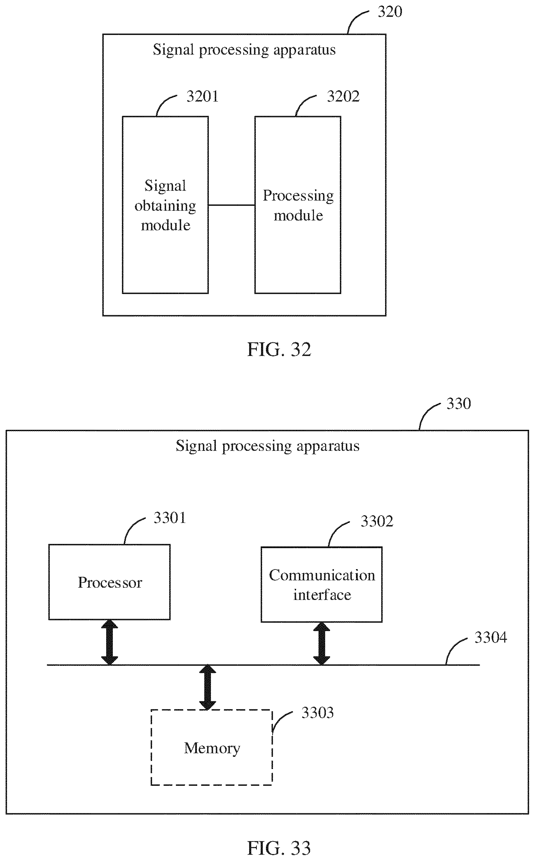

Refer to FIG. 32. FIG. 32 is a schematic diagram of a structure of a signal processing apparatus 320 according to an embodiment of this application. Optionally, the signal processing apparatus 320 may be an independent device like a lidar or a fusion detection radar, or may be a component included in an independent device, for example, a chip, a software module, or an integrated circuit. The signal processing apparatus 320 is configured to implement the foregoing signal processing method, for example, the signal processing method in the embodiment shown in FIG. 11 or FIG. 29.

In a possible implementation, the signal processing apparatus 320 may include a signal obtaining module 3201 and a processing module 3202. The processing module 3202 may be configured to implement a computing function or a processing function performed by the processing apparatus in the foregoing signal processing method, for example, S 1107, and/or configured to support another process of the technology described in this specification. The signal obtaining module 3201 may be configured to perform a signal obtaining operation in the foregoing signal processing method, for example, S1103 and S1106, and/or configured to support another process of the technology described in this specification. In some possible implementation scenarios, the signal obtaining module may be alternatively replaced with a communication interface module and/or a transceiver module, and the interface module and/or the transceiver module may be configured to support another process of the technology described in this specification.

In a possible design, the signal processing apparatus 320 is configured to implement the method on the processing apparatus side in the embodiment shown in FIG. 11.

The signal obtaining module 3201 is configured to obtain at least one first echo signal from a first detection module, where the first echo signal is obtained by using a first optical signal detected by the first detection module, and the first optical signal includes a return signal obtained by detecting a detection region by using a transmit signal.

The signal obtaining module 3201 is further configured to obtain at least one second echo signal from a second detection module, where the second echo signal is obtained by using a second optical signal detected by the second detection module, and the second optical signal includes a background optical signal from the detection region.

The first detection module and the second detection module are included in a same detector.

The processing module 3202 is configured to obtain a detection result of the detection region based on the at least one first echo signal and the at least one second echo signal.

In a possible implementation, the processing module 3202 is further configured to:
process the at least one first echo signal to obtain point cloud data corresponding to the detection region; and
process the at least one second echo signal, and image the detection region, to obtain an image corresponding to the detection region.

In a possible implementation, the processing module 3202 is further configured to:
obtain enhanced point cloud data of the detection region based on the point cloud data corresponding to the detection region and the image corresponding to the detection region.

In a possible implementation, a quantity of points in the enhanced point cloud data is greater than a quantity of points in the point cloud data that corresponds to the detection region and that is obtained by processing the at least one first echo signal.

In a possible implementation, the processing module 3202 is further configured to:
filter out, based on a contour that is of a target object in the detection region and that is indicated by the image of the detection region, noise in the point cloud data corresponding to the detection region, to obtain the enhanced point cloud data.

In a possible implementation, the processing module 3202 is further configured to:
obtain a size of the target object in the detection region based on the enhanced point cloud data.

In a possible implementation, the enhanced point cloud data is specifically enhanced point cloud data in an overlapping region, and the overlapping region is an overlapping region between the point cloud data of the detection region and the image of the detection region.

In a possible implementation, the processing module 3202 is further configured to:
perform enhancement on the image of the detection region based on the point cloud data of the detection region, to obtain an enhanced image of the detection region.

Enhancement includes one or more of the following operations:
shadow removal, noise reduction, contrast enhancement, overexposure removal, or underexposure compensation.

In a possible implementation, the processing module 3202 is further configured to:
obtain a fusion detection result of the detection region based on the point cloud data of the detection region and the image of the detection region.

For another example, when a pixel granularity of the image is smaller, the image has better resolution than the point cloud data. The enhanced point cloud data obtained by fusing the image and the point cloud data has higher resolution than the point cloud data. Therefore, resolution of the detection result is improved.

In a possible implementation, the detector includes P×Q detection elements, P is a quantity of rows of detection elements included in the detector, and Q is a quantity of columns of detection elements included in the detector.

In a possible implementation, the first detection module and the second detection module each include a plurality of detection elements.

In a possible implementation, the at least one first echo signal obtained from the first detection module includes a plurality of first pixels, a quantity of detection elements corresponding to the first pixels is M, and M is a positive integer;
the at least one second echo signal obtained from the second detection module includes a plurality of second pixels, a quantity of detection elements corresponding to the first pixels is N, and N is a positive integer; and
M is greater than N.

In a possible implementation, the at least one first echo signal is obtained by the first detection module through detection at at least one scanning angle; and
the at least one second echo signal is obtained by the second detection module through detection at at least one scanning angle.

In another possible design, the signal processing apparatus 320 is configured to implement the method on the processing apparatus side in the embodiment shown in FIG. 29.

The signal obtaining module 3201 is configured to obtain at least one echo signal from a detector, where the at least one echo signal is obtained by using an optical signal detected by the detector, and the optical signal includes a return signal obtained by detecting a detection region by using a transmit signal.

The processing module 3202 is configured to obtain, based on the at least one echo signal, point cloud data corresponding to the detection region and an image corresponding to the detection region.

The processing module 3202 is further configured to obtain a detection result of the detection region based on the point cloud data corresponding to the detection region and the image corresponding to the detection region.

In a possible implementation, the at least one echo signal includes a feature signal and a background signal.

The feature signal includes one or more of a pulse signal, a peak signal, a rising edge signal, and a waveform center-of-mass signal.

The background signal is a signal other than the feature signal in the at least one echo signal.

In a possible implementation, the processing module 3202 is further configured to:
obtain, based on the feature signal in the at least one echo signal, the point cloud data corresponding to the detection region; and
obtain, based on the background signal in the at least one echo signal, the image corresponding to the detection region.

In a possible implementation, the processing module 3202 is further configured to:
obtain enhanced point cloud data of the detection region based on the point cloud data corresponding to the detection region and the image corresponding to the detection region.

In a possible implementation, a quantity of points in the enhanced point cloud data is greater than a quantity of points in the point cloud data that corresponds to the detection region and that is obtained by processing the at least one first echo signal.

In a possible implementation, the processing module 3202 is further configured to:
filter out, based on a contour that is of a target object in the detection region and that is indicated by the image of the detection region, noise in the point cloud data corresponding to the detection region, to obtain the enhanced point cloud data.

In a possible implementation, the processing module 3202 is further configured to:
obtain a size of the target object in the detection region based on the enhanced point cloud data.

In a possible implementation, the enhanced point cloud data is specifically enhanced point cloud data in an overlapping region, and the overlapping region is an overlapping region between the point cloud data of the detection region and the image of the detection region.

In a possible implementation, the processing module 3202 is further configured to:
perform enhancement on the image of the detection region based on the point cloud data of the detection region, to obtain an enhanced image of the detection region.

Enhancement includes one or more of the following operations:
shadow removal, noise reduction, contrast enhancement, overexposure removal, or underexposure compensation.

In a possible implementation, the processing module 3202 is further configured to:
obtain a fusion detection result of the detection region based on the point cloud data of the detection region and the image of the detection region.

For another example, when a pixel granularity of the image is smaller, the image has better resolution than the point cloud data. The enhanced point cloud data obtained by fusing the image and the point cloud data has higher resolution than the point cloud data. Therefore, resolution of the detection result is improved.

In a possible implementation, the detector includes P×Q detection elements, P is a quantity of rows of detection elements included in the detector, and Q is a quantity of columns of detection elements included in the detector.

In a possible implementation, the at least one echo signal is obtained by the detector through detection at at least one scanning angle.

Refer to FIG. 33. FIG. 33 is a schematic diagram of a structure of another possible signal processing apparatus 330 according to an embodiment of this application. Optionally, the signal processing apparatus 330 may be an independent device like a lidar or a fusion detection radar, or may be a component included in an independent device, for example, a chip, a software module, or an integrated circuit. The signal processing apparatus 330 may include at least one processor 3301 and a communication interface 3302. Optionally, at least one memory 3303 may be further included. Further, optionally, a connection line 3304 may be further included. The processor 3301, the communication interface 3302, and/or the memory 3303 are/is connected through the connection line 3304, and communicate with each other through the connection line 3304 to transfer a control and/or data signal.
(1) The processor 3301 is a module for performing an arithmetic operation and/or a logical operation, and may specifically include one or more of the following apparatuses: a CPU, an MCU, an AP, a TDC, a filter, a GPU, an MPU, an ASIC, an ISP, a DSP, an FPGA, a CPLD, a coprocessor (assisting a central processing unit in completing corresponding processing and application), an NPU, and/or the like.
(2) The communication interface 3302 may be configured to provide an information input or output for the at least one processor. In some possible scenarios, the communication interface 3302 may include an interface circuit. In addition/alternatively, the communication interface 3302 may be configured to receive data sent from the outside and/or send data to the outside. For example, the communication interface 3302 may include a wired link interface like an Ethernet cable, or may be a wireless link (Wi-Fi, Bluetooth, universal wireless transmission, an in-vehicle short-range communication technology, another short-range wireless communication technology, or the like) interface. Optionally, the communication interface 3302 may further include a transmitter (for example, a radio frequency transmitter or an antenna), a receiver, or the like coupled to the interface.

Optionally, if the signal processing apparatus 330 is an independent device, the communication interface 3302 may include a receiver and a transmitter. The receiver and the transmitter may be a same component or different components. When the receiver and the transmitter are the same component, the component may be referred to as a transceiver.

Optionally, if the signal processing apparatus 330 is a chip or a circuit, the communication interface 3302 may include an input interface and an output interface. The input interface and the output interface may be a same interface, or may separately be different interfaces.

Optionally, a function of the communication interface 3302 may be implemented by using a transceiver circuit or a dedicated transceiver chip. The processor 3301 may be implemented by using a dedicated processing chip, a processing circuit, a processor, or a general-purpose chip.

(3) The memory 3303 is configured to provide storage space, and the storage space may store data such as an operating system and a computer program. The memory 3303 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The foregoing enumerated functions and actions of the modules or units in the signal processing apparatus 330 are merely examples for description.

Function units in the signal processing apparatus 330 may be configured to implement the foregoing signal processing method, for example, the method described in the embodiment shown in FIG. 11 or FIG. 29. To avoid repetition, detailed descriptions are omitted herein.

Optionally, the processor 3301 may be a processor that is specially configured to perform the foregoing method (referred to as a dedicated processor for ease of differentiation), or may be a processor that performs the foregoing method by invoking a computer program (referred to as a dedicated processor for ease of differentiation). Optionally, the at least one processor may further include both a dedicated processor and a general-purpose processor.

Optionally, when the computing device includes at least one memory 3303, if the processor 3301 implements the foregoing method by invoking a computer program, the computer program may be stored in the memory 3303.

This application further provides a computer-readable storage medium. The computer-readable storage medium stores instructions. When the instructions are run on at least one processor, the foregoing signal processing method, for example, the method in FIG. 11 or FIG. 29, is implemented.

This application further provides a computer program product. The computer program product includes computer instructions. When the computer program product is executed by a computing device, the foregoing signal processing method, for example, the method shown in FIG. 11 or FIG. 29, is implemented.

In embodiments of this application, the word "example", "for example" or the like is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

In embodiments of this application, the term "at least one" indicates one or more, and the term "a plurality of" indicates two or more. "At least one of the following items (pieces)" or a similar expression thereof indicates any combination of these items, including a single item (piece) or any combination of a plurality of items (pieces). For example, at least one item (piece) of a, b, or c may represent a, b, c, (a and b), (a and c), (b and c), or (a, b, and c), where a, b, and c may be singular or plural. The term "and/or" describes an association relationship between associated objects and represents that three relationships may exist. For example, A and/or B may represent the following three cases: Only A exists, both A and B exist, and only B exists, where A and B may be singular or plural. The character "/" generally indicates an "or" relationship between associated objects.

In addition, unless otherwise specified, ordinal numbers such as "first" and "second" used in embodiments of this application are used to distinguish between a plurality of objects, and are not intended to limit an order, a time sequence, priorities, or importance of the plurality of objects. For example, a first device and a second device are merely for ease of description, but do not indicate differences in structures, importance, and the like of the first device and the second device. In some embodiments, the first device and the second device may alternatively be a same device.

According to the context, the term "when" used in the foregoing embodiments may be interpreted as a meaning of "if", "after", "in response to determining", or "in response to detecting". The foregoing descriptions are only optional embodiments of this application, but are not intended to limit this application. Any modification, equivalent replacement, or improvement made within the concept and principle of this application should fall within the protection scope of this application.

A person of ordinary skill in the art may understand that all or some of the steps of embodiments may be implemented by hardware or a program instructing related hardware. The program may be stored in a computer-readable storage medium. The storage medium mentioned above may be a read-only memory, a magnetic disk, an optical disc, or the like.

## Claims

1. A signal processing method, comprising:
obtaining at least one first echo signal from a first detection module, wherein the first echo signal is obtained by using a first optical signal detected by the first detection module, and the first optical signal comprises a return signal obtained by detecting a detection region by using a transmit signal;
obtaining at least one second echo signal from a second detection module, wherein the second echo signal is obtained by using a second optical signal detected by the second detection module, and the second optical signal comprises a background optical signal from the detection region; and
the first detection module and the second detection module are comprised in a same detector; and
obtaining a detection result of the detection region based on the at least one first echo signal and the at least one second echo signal.

2. The method according to claim 1, wherein the method further comprises:
processing the at least one first echo signal to obtain point cloud data corresponding to the detection region; and
processing the at least one second echo signal, and imaging the detection region, to obtain an image corresponding to the detection region.

3. The method according to claim 1 or 2, wherein the obtaining a detection result of the detection region based on the first echo signal and the second echo signal comprises:
obtaining enhanced point cloud data of the detection region based on the point cloud data corresponding to the detection region and the image corresponding to the detection region.

4. The method according to claim 3, wherein a quantity of points in the enhanced point cloud data is greater than a quantity of points in the point cloud data that corresponds to the detection region and that is obtained by processing the at least one first echo signal.

5. The method according to claim 3 or 4, wherein the obtaining enhanced point cloud data of the detection region based on the point cloud data corresponding to the detection region and the image corresponding to the detection region comprises:
filtering out, based on a contour that is of a target object in the detection region and that is indicated by the image of the detection region, noise in the point cloud data corresponding to the detection region, to obtain the enhanced point cloud data.

6. The method according to any one of claims 3 to 5, wherein the method further comprises:
obtaining a size of the target object in the detection region based on the enhanced point cloud data.

7. The method according to any one of claims 3 to 6, wherein the enhanced point cloud data is specifically enhanced point cloud data in an overlapping region, and the overlapping region is an overlapping region between the point cloud data of the detection region and the image of the detection region.

8. The method according to claim 1 or 2, wherein the obtaining a detection result of the detection region based on the first echo signal and the second echo signal comprises:
performing enhancement on the image of the detection region based on the point cloud data of the detection region, to obtain an enhanced image of the detection region, wherein
enhancement comprises one or more of the following operations:
shadow removal, noise reduction, contrast enhancement, overexposure removal, or underexposure compensation.

9. The method according to any one of claims 1 to 8, wherein the detector comprises P×Q detection elements, P is a quantity of rows of detection elements comprised in the detector, and Q is a quantity of columns of detection elements comprised in the detector.

10. The method according to claim 9, wherein the first detection module and the second detection module each comprise a plurality of detection elements.

11. The method according to any one of claims 1 to 10, wherein the at least one first echo signal obtained from the first detection module comprises a plurality of first pixels, a quantity of detection elements corresponding to the first pixels is M, and M is a positive integer;
the at least one second echo signal obtained from the second detection module comprises a plurality of second pixels, a quantity of detection elements corresponding to the second pixels is N, and N is a positive integer; and
M is greater than N.

12. The method according to any one of claims 1 to 11, wherein
the at least one first echo signal is obtained by the first detection module through detection at at least one scanning angle; and
the at least one second echo signal is obtained by the second detection module through detection at at least one scanning angle.

13. A signal processing method, applied to a detection apparatus, wherein the method comprises:
obtaining at least one echo signal from a detector, wherein the at least one echo signal is obtained by using an optical signal detected by the detector, and the optical signal comprises a return signal obtained by detecting a detection region by using a transmit signal;
obtaining, based on the at least one echo signal, point cloud data corresponding to the detection region and an image corresponding to the detection region; and
obtaining a detection result of the detection region based on the point cloud data corresponding to the detection region and the image corresponding to the detection region.

14. The method according to claim 13, wherein the at least one echo signal comprises a feature signal and a background signal;
the feature signal comprises one or more of a pulse signal, a peak signal, a rising edge signal, and a waveform center-of-mass signal; and
the background signal is a signal other than the feature signal in the at least one echo signal.

15. The method according to claim 14, wherein the obtaining, based on the at least one echo signal, point cloud data of the detection region and an image corresponding to the detection region comprises:
obtaining, based on the feature signal in the at least one echo signal, the point cloud data corresponding to the detection region; and
imaging the detection region based on the background signal in the at least one echo signal, to obtain the image corresponding to the detection region.

16. The method according to any one of claims 13 to 15, wherein the obtaining a detection result of the detection region based on the point cloud data corresponding to the detection region and the image corresponding to the detection region comprises:
obtaining enhanced point cloud data of the detection region based on the point cloud data corresponding to the detection region and the image corresponding to the detection region.

17. The method according to claim 16, wherein a quantity of points in the enhanced point cloud data is greater than a quantity of points in the point cloud data that corresponds to the detection region and that is obtained by processing the at least one echo signal.

18. The method according to claim 16 or 17, wherein the obtaining enhanced point cloud data of the detection region based on the point cloud data corresponding to the detection region and the image corresponding to the detection region comprises:
filtering out, based on a contour that is of a target object in the detection region and that is indicated by the image of the detection region, noise in the point cloud data corresponding to the detection region, to obtain the enhanced point cloud data.

19. The method according to any one of claims 16 to 18, wherein the method further comprises:
obtaining a size of the target object in the detection region based on the enhanced point cloud data.

20. The method according to any one of claims 13 to 15, wherein the obtaining enhanced point cloud data of the detection region based on the point cloud data corresponding to the detection region and the image corresponding to the detection region comprises:
performing enhancement on the image of the detection region based on the point cloud data of the detection region, to obtain an enhanced image of the detection region, wherein
enhancement comprises one or more of the following operations:
shadow removal, noise reduction, contrast enhancement, overexposure removal, or underexposure compensation.

21. The method according to any one of claims 13 to 20, wherein the detector comprises P×Q detection elements, P is a quantity of rows of detection elements comprised in the detector, and Q is a quantity of columns of detection elements comprised in the detector.

22. The method according to any one of claims 13 to 21, wherein
the at least one first echo signal is obtained by the detector through detection at at least one scanning angle.

23. A signal transmission method, comprising:
detecting, by a first detection module, a first optical signal and obtaining at least one first echo signal, wherein the first optical signal comprises a return signal obtained by detecting a detection region by using a transmit signal;
sending, by the first detection module, the at least one first echo signal to a signal processing apparatus;
detecting, by a second detection module, a second optical signal and obtaining at least one second echo signal, wherein the second optical signal comprises a background optical signal from the detection region; and
sending, by the second detection module, the at least one second echo signal to the signal processing apparatus, wherein
the first detection module and the second detection module are comprised in a same detector, and the at least one first echo signal and the at least one second echo signal are used to obtain a detection result of the detection region.

24. The method according to claim 23, wherein the at least one first echo signal is used to obtain point cloud data corresponding to the detection region, and the at least one second echo signal is used to obtain an image corresponding to the detection region.

25. The method according to claim 23 or 24, wherein the detector comprises P×Q detection elements, P is a quantity of rows of detection elements comprised in the detector, and Q is a quantity of columns of detection elements comprised in the detector.

26. The method according to claim 25, wherein the first detection module and the second detection module each comprise a plurality of detection elements.

27. A signal transmission method, comprising:
detecting, by a detector, an optical signal to obtain at least one echo signal, wherein the optical signal comprises a return signal obtained by detecting a detection region by using a transmit signal; and
sending, by the detector, the at least one echo signal to a signal processing apparatus, wherein
the at least one echo signal is used to obtain point cloud data corresponding to the detection region and an image corresponding to the detection region.

28. The method according to claim 27, wherein the at least one echo signal comprises a feature signal and a background signal;
the feature signal comprises one or more of a pulse signal, a peak signal, a rising edge signal, and a waveform center-of-mass signal; and
the background signal is a signal other than the feature signal in the at least one echo signal.

29. The method according to claim 28, wherein
the feature signal in the at least one echo signal is used to obtain the point cloud data corresponding to the detection region; and
the background signal in the at least one echo signal is used to obtain the image corresponding to the detection region.

30. A detection apparatus, wherein the detection apparatus comprises a laser transmitter and a detector, and the detector comprises a first detection module and a second detection module;
the laser transmitter is configured to generate a transmit signal;
the detector is configured to receive an optical signal and obtain an echo signal;
the first detection module is configured to detect a first optical signal and obtain at least one first echo signal, wherein the first optical signal comprises a return signal obtained by detecting a detection region by using the transmit signal; and
the second detection module is configured to detect a second optical signal and obtain at least one second echo signal, wherein the second optical signal comprises a background optical signal from the detection region; and
the at least one first echo signal and the at least one second echo signal are used to obtain a detection result of the detection region.

31. The apparatus according to claim 30, wherein the at least one first echo signal is used to obtain point cloud data corresponding to the detection region, and the at least one second echo signal is used to obtain an image corresponding to the detection region.

32. The apparatus according to claim 30 or 31, wherein the detector comprises P×Q detection elements, P is a quantity of rows of detection elements comprised in the detector, and Q is a quantity of columns of detection elements comprised in the detector.

33. The apparatus according to claim 32, wherein the first detection module and the second detection module each comprise a plurality of detection elements.

34. A detection apparatus, wherein the detection apparatus comprises a laser transmitter and a detector;
the laser transmitter is configured to generate a transmit signal; and
the detector is configured to receive an optical signal and obtain at least one echo signal, wherein the optical signal comprises a return signal obtained by detecting a detection region by using the transmit signal; and
the at least one echo signal is used to obtain point cloud data corresponding to the detection region and an image corresponding to the detection region.

35. The apparatus according to claim 34, wherein the at least one echo signal comprises a feature signal and a background signal;
the feature signal comprises one or more of a pulse signal, a peak signal, a rising edge signal, and a waveform center-of-mass signal; and
the background signal is a signal other than the feature signal in the at least one echo signal.

36. The apparatus according to claim 35, wherein
the feature signal in the at least one echo signal is used to obtain the point cloud data corresponding to the detection region; and
the background signal in the at least one echo signal is used to obtain the image corresponding to the detection region.

37. A signal processing apparatus, comprising:
a signal obtaining module, configured to obtain at least one first echo signal from a first detection module, wherein the first echo signal is obtained by using a first optical signal detected by the first detection module, and the first optical signal comprises a return signal obtained by detecting a detection region by using a transmit signal;
the signal obtaining module is further configured to obtain at least one second echo signal from a second detection module, wherein the second echo signal is obtained by using a second optical signal detected by the second detection module, and the second optical signal comprises a background optical signal from the detection region; and
the first detection module and the second detection module are comprised in a same detector; and
a processing module, configured to obtain a detection result of the detection region based on the at least one first echo signal and the at least one second echo signal.

38. The apparatus according to claim 37, wherein the processing module is further configured to:
process the at least one first echo signal to obtain point cloud data corresponding to the detection region; and
process the at least one second echo signal, and image the detection region, to obtain an image corresponding to the detection region.

39. The apparatus according to claim 37 or 38, wherein the processing module is further configured to:
obtain enhanced point cloud data of the detection region based on the point cloud data corresponding to the detection region and the image corresponding to the detection region.

40. The apparatus according to claim 39, wherein a quantity of points in the enhanced point cloud data is greater than a quantity of points in the point cloud data that corresponds to the detection region and that is obtained by processing the at least one first echo signal.

41. The apparatus according to claim 39 or 40, wherein the processing module is further configured to:
filter out, based on a contour that is of a target object in the detection region and that is indicated by the image of the detection region, noise in the point cloud data corresponding to the detection region, to obtain the enhanced point cloud data.

42. The apparatus according to any one of claims 37 to 41, wherein the processing module is further configured to:
obtain a size of the target object in the detection region based on the enhanced point cloud data.

43. The apparatus according to claim 39, wherein the enhanced point cloud data is specifically enhanced point cloud data in an overlapping region, and the overlapping region is an overlapping region between the point cloud data of the detection region and the image of the detection region.

44. The apparatus according to claim 37 or 38, wherein the processing module is further configured to:
perform enhancement on the image of the detection region based on the point cloud data of the detection region, to obtain an enhanced image of the detection region, wherein
enhancement comprises one or more of the following operations:
shadow removal, noise reduction, contrast enhancement, overexposure removal, or underexposure compensation.

45. A signal processing apparatus, comprising:
a signal obtaining module, configured to obtain at least one echo signal from a detector, wherein the at least one echo signal is obtained by using an optical signal detected by the detector, and the optical signal comprises a return signal obtained by detecting a detection region by using a transmit signal; and
a processing module, configured to obtain, based on the at least one echo signal, point cloud data corresponding to the detection region and an image corresponding to the detection region, wherein
the processing module is further configured to obtain a detection result of the detection region based on the point cloud data corresponding to the detection region and the image corresponding to the detection region.

46. The apparatus according to claim 45, wherein the at least one echo signal comprises a feature signal and a background signal;
the feature signal comprises one or more of a pulse signal, a peak signal, a rising edge signal, and a waveform center-of-mass signal; and
the background signal is a signal other than the feature signal in the at least one echo signal.

47. The apparatus according to claim 46, wherein the processing module is further configured to:
obtain, based on the feature signal in the at least one echo signal, the point cloud data corresponding to the detection region; and
obtain, based on the background signal in the at least one echo signal, the image corresponding to the detection region.

48. The apparatus according to any one of claims 45 to 47, wherein the processing module is further configured to:
obtain enhanced point cloud data of the detection region based on the point cloud data corresponding to the detection region and the image corresponding to the detection region.

49. The apparatus according to claim 48, wherein a quantity of points in the enhanced point cloud data is greater than a quantity of points in the point cloud data that corresponds to the detection region and that is obtained by processing the at least one echo signal.

50. The apparatus according to claim 48 or 49, wherein the processing module is further configured to:
filter out, based on a contour that is of a target object in the detection region and that is indicated by the image of the detection region, noise in the point cloud data corresponding to the detection region, to obtain the enhanced point cloud data.

51. The apparatus according to any one of claims 48 to 50, wherein the processing module is further configured to:
obtain a size of the target object in the detection region based on the enhanced point cloud data.

52. The apparatus according to any one of claims 48 to 51, wherein the processing module is further configured to:
perform enhancement on the image of the detection region based on the point cloud data of the detection region, to obtain an enhanced image of the detection region, wherein
enhancement comprises one or more of the following operations:
shadow removal, noise reduction, contrast enhancement, overexposure removal, or underexposure compensation.

53. A chip system, wherein the chip system comprises a processor and a communication interface;
the communication interface is configured to receive and/or send data, and/or the communication interface is configured to provide an input and/or an output for the processor, and
the processor is configured to implement the method according to any one of claims 1 to 12,
configured to implement the method according to any one of claims 13 to 22,
configured to implement the method according to any one of claims 23 to 26, or
configured to implement the method according to any one of claims 27 to 29.

54. A terminal, wherein the terminal comprises the detection apparatus according to claims 30 to 33,
the terminal comprises the detection apparatus according to claims 34 to 36,
the terminal comprises the signal processing apparatus according to claims 37 to 44,
the terminal comprises the signal processing apparatus according to claims 45 to 52, or
the terminal comprises the chip system according to claim 53.

55. The terminal according to claim 54, wherein the terminal is a vehicle, an uncrewed aerial vehicle, or a robot.

56. A computer-readable storage medium, wherein the computer-readable storage medium stores instructions, and when the instructions are run on at least one processor, the method according to any one of claims 1 to 29 is implemented.
